# EUROPEAN PATENT SPECIFICATION

(11) **EP 4 467 464 B1**
(45) Date of publication and mention of the grant of the patent: **04.02.2026**
(21) Application number: 22922120.5
(22) Date of filing: 12.12.2022
(51) Int. Cl.: B64D 33/08, B64C 27/26, B64D 27/24

(54) **CONTROL DEVICE FOR ELECTRIC AIRCRAFT**
STEUERVORRICHTUNG FÜR EIN ELEKTRISCHES FLUGZEUG
DISPOSITIF DE COMMANDE POUR AÉRONEF ÉLECTRIQUE

(30) Priority: 19.01.2022 JP 2022006558
(43) Date of publication of application: 27.11.2024
(73) Proprietor: DENSO CORPORATION, Kariya-city, Aichi 448-8661 (JP)
(72) Inventor: TAKEMURA ,Yuichi, Kariya-city, Aichi 4488661 (JP); SUGITA, Shun, Kariya-city, Aichi 4488661 (JP); NAKATA, Shingo, Kariya-city, Aichi 4488661 (JP)
(74) Representative: TBK
(86) International application number: PCT/JP2022/045712
(87) International publication number: WO 2023/139969

(56) References cited:
- WO-A1-2021/161755
- JP-A- 2005 062 979
- JP-A- 2005 062 979
- JP-A- 2009 187 347
- JP-A- 2009 187 347
- JP-A- 2013 168 107
- JP-A- 2013 168 107
- JP-A- 2020 119 243
- JP-A- 2020 119 243
- JP-A- 2020 131 781
- JP-A- 2020 131 781

## Description

### TECHNICAL FIELD

The present disclosure relates to a control device of an electric flight vehicle.

### BACKGROUND ART

JP-2020-131781A describes a flight vehicle that flies using a plurality of rotor blades. In this aircraft, the rotor blades are driven to rotate by the drive of the motor. This flight vehicle has a blower fan for cooling a motor. The blower fan is driven to rotate together with the rotor blades by the drive of the motor, and sends cooling air to the motor. This flight vehicle is an electric powered flight vehicle.

Furthermore, document WO 2021/161755 A1 discloses a control device which controls an electric drive system installed in an aircraft, comprising an abnormality occurrence detecting unit, which detects an occurrence of a predetermined specific abnormality, which is at least one of a temperature abnormality of the switching element and an abnormality accompanying a temperature abnormality, and a switching element control unit which controls the switching element in such a way as to reduce a switching element loss if the specific abnormality has been detected.

### SUMMARY OF INVENTION

In the flight vehicle disclosed in JP-2020-131781A, if an abnormality occurs regarding cooling of the motor by the blower fan, there is a concern that the motor may not be cooled normally. In such case, the temperature of the motor tends to become excessively high, and the safety of the electric flight vehicle tends to deteriorate.

It is an object of the present disclosure to provide a control device of an electric flight vehicle that can raise safety level when an abnormality occurs regarding cooling of a drive device.

According to the invention, the object is achieved by a control device according to claim 1. Further features and advantageous modifications are shown in the dependent claims.

Disclosed aspects of plural embodiments in the specification adopt different technical solutions from each other in order to achieve their respective objectives. Reference numerals in parentheses in the claims and the present section are an example indicating a correspondence with specific means described in an embodiment to be described later as one aspect, and do not limit the technical scope.

In order to achieve the above object, a disclosed aspect is a control device that is configured to control an electric flight vehicle. The electric flight vehicle includes an electric drive device configured to drive and rotate a rotor blade and a cooling unit configured to cool the drive device. The control device comprises:
a temperature acquisition unit configured to acquire temperature of the drive device as a device temperature; and
a cooling determination unit configured to determine, according to the device temperature, whether a cooling-related abnormality has occurred as an abnormality related to cooling of the drive device by the cooling unit.

According to the above-described aspect, it is determined whether a cooling-related abnormality has occurred regarding cooling of the drive device by the cooling unit. Therefore, when a cooling-related abnormality occurs, it is possible to take safety measures such as notifying that the cooling-related abnormality has occurred. This safety measure at least prevents temperature of the drive device from rising excessively during the flight of the electric flight vehicle, thereby raising the safety level of the electric flight vehicle.

### BRIEF DESCRIPTION OF THE DRAWINGS

FIG. 1 is a diagram showing a configuration of an eVTOL in a first embodiment.
FIG. 2 is a block diagram showing an electrical configuration of a flight system and an EPU.
FIG. 3 is a flowchart showing a procedure of abnormality diagnosis control.
FIG. 4 is a diagram for explaining how the EPU temperature changes.
FIG. 5 is a flowchart showing a procedure of abnormality diagnosis control in a second embodiment.
FIG. 6 is a diagram for explaining how the EPU temperature changes.
FIG. 7 is a flowchart showing a procedure of abnormality diagnosis control in a third embodiment.
FIG. 8 is a flowchart showing a procedure of abnormality diagnosis control in a fourth embodiment.
FIG. 9 is a flowchart showing a procedure of abnormality diagnosis control in a fifth embodiment.
FIG. 10 is a block diagram showing an electrical configuration of a flight system and an EPU in a sixth embodiment.
FIG. 11 is a flowchart showing a procedure of abnormality diagnosis control.
FIG. 12 is a flowchart showing procedure of abnormality diagnosis control in seventh embodiment.

### DETAILED DESCRIPTION

The following will describe embodiments for carrying out the present disclosure with reference to the drawings. In each of the embodiments, parts / configurations corresponding to the elements described in the preceding embodiments are denoted by the same reference numerals, and redundant explanation may be omitted. When only a part of a configuration is described in an embodiment, other preceding embodiment(s) may be applied to the other parts of the configuration. It may be possible not only to combine parts the combination of which is explicitly described in an embodiment, but also to combine parts of respective embodiments the combination of which is not explicitly described if any obstacle does not especially occur in combining the parts of the respective embodiments.

### <First Embodiment>

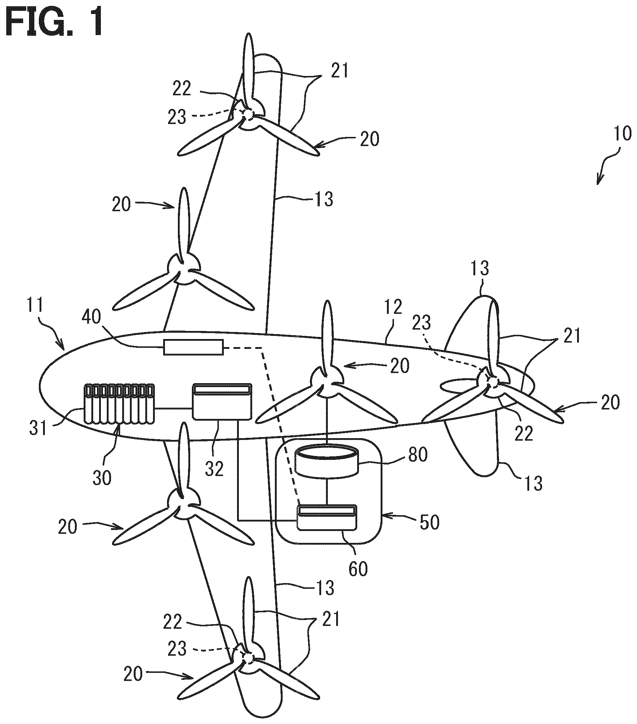

A flight system 30 shown in FIG. 1 is mounted on an eVTOL 10. The eVTOL10 is an electric vertical takeoff and landing aircraft. An electric vertical takeoff and landing aircraft is an electric vertical takeoff and landing aircraft that can take off and land vertically. The eVTOL is an abbreviation for electric Vertical Takeoff and landing aircraft. The eVTOL 10 is an electricity-driven aircraft that flies in the atmosphere, and corresponds to a flight vehicle and an electric aircraft. The eVTOL 10 may be either a manned flight vehicle with a crew on board or an unmanned flight vehicle with no crew on board. The eVTOL 10 is operated by a pilot who is an operator of the aircraft. The pilot may operate the eVTOL 10 as a crew member, or may remotely control the eVTOL 10 without riding on the eVTOL 10. The flight system 30 is a system that drives the eVTOL 10 to fly. The flight system 30 may also be referred to as a propulsion system.

The eVTOL 10 has a body 11 and a rotor 20. The body 11 has a fuselage main body 12 and wings 13. The fuselage main body 12 is a fuselage of the body 11, and has a shape that extends from front to rear, for example. The fuselage main body 12 has a crew compartment for a crew member to ride. The wings 13 extend from the fuselage main body 12, and a plurality of wings 13 are provided on the fuselage main body 12. The wing 13 is a fixed wing. The plurality of wings 13 include a main wing, a tail wing, and the like.

A plurality of rotors 20 are provided on the body 11. The eVTOL 10 is a multirotor having at least three rotors 20. For example, at least four rotors 20 are provided on the body 11. The rotor 20 is provided on each of the fuselage main body 12 and the wing 13. The rotor 20 rotates about a rotor axis. The rotor axis is an axis of rotation of the rotor 20, and coincides with a center line of the rotor 20. The rotor 20 is a rotor blade, and is capable of generating thrust and lift in the eVTOL 10. Note that the force generated when the eVTOL 10 ascends may also be referred to as thrust.

The rotor 20 has blades 21, a rotor head 22, and a rotor shaft 23. A plurality of blades 21 are arranged along a circumferential direction of the rotor axis. The rotor head 22 connects the plurality of blades 21. The blades 21 extend from the rotor head 22 in a radial direction of the rotor axis. The blade 21 is a blade that rotates together with the rotor shaft 23. The rotor shaft 23 is a rotation axis of the rotor 20, and extends from the rotor head 22 along the rotor axis.

The eVTOL 10 is a tilt rotor aircraft. In the eVTOL 10, the rotor 20 is tiltable. That is, a tilt angle of the rotor 20 is adjustable. For example, when the eVTOL 10 ascends, the orientation of the rotor 20 is set so that the rotor axis extends in the vertical direction. In such case, the rotor 20 functions as a lift rotor for generating lift on the eVTOL 10. The lift rotor also functions as a hovering rotor for hovering the eVTOL 10. Further, the lift rotor can also cause descent of the eVTOL 10. Note that the hovering rotor may also be referred to as a hovering rotor.

When the eVTOL 10 moves forward, the orientation of the rotor 20 is set so that the rotor axis extends in the front-rear direction. In such case, the rotor 20 functions as a cruise rotor for generating thrust in the eVTOL 10. In the present embodiment, the front for the pilot is the front for the eVTOL 10. Note that the direction in which the eVTOL 10 moves in the horizontal direction may be set as the forward direction, regardless of the forward direction for the pilot. In such case, the eVTOL 10 is always moving forward even if the direction of movement is changed.

The eVTOL 10 has a tilt mechanism (not shown). The tilt mechanism includes a motor and the like, and is driven to adjust the tilt angle of the rotor 20. The tilt mechanism may also be referred to as a tilt drive unit. For example, in the eVTOL 10, the wings 13 are tiltable relative to the fuselage main body 12. That is, it is possible to tilt the rotor 20 together with the wings 13. In such eVTOL 10, the tilt angle of the rotor 20 is adjusted by adjusting an inclination angle of the wings 13 with respect to the fuselage main body 12. In such eVTOL 10, the mechanism for adjusting the inclination angle of the wings 13 is a tilt mechanism.

Note that in the eVTOL 10, the rotor 20 may be able to tilt relative to the body 11. For example, the tilt angle of the rotor 20 may be adjusted by adjusting a relative inclination angle of the rotor 20 with respect to the wings 13.

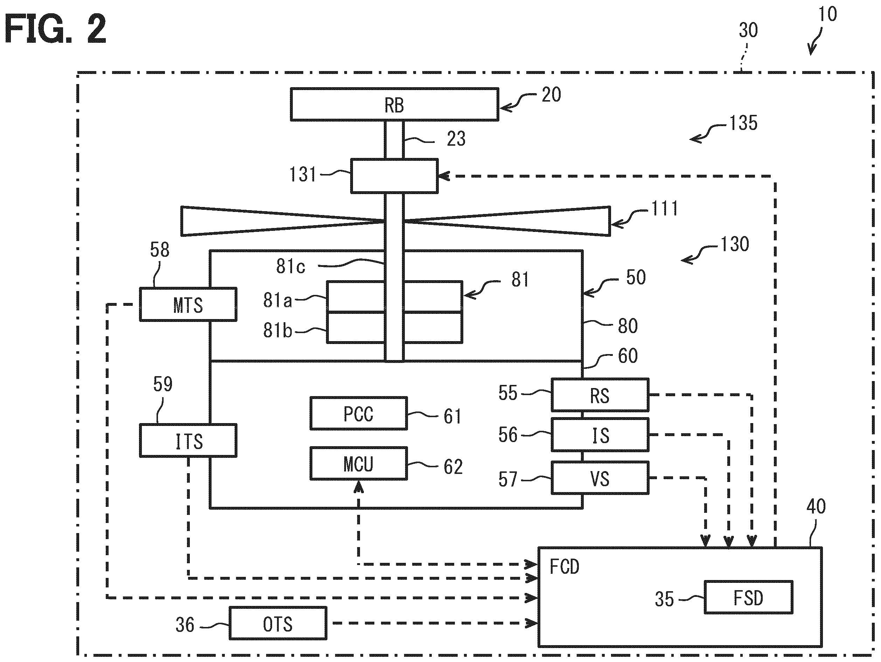

As shown in FIGS. 1 and 2, the flight system 30 includes a battery 31, a distributor 32, an outside air temperature sensor 36, a flight control device 40, and an EPU 50. The EPU 50 includes a rotation sensor 55, a current sensor 56, a voltage sensor 57, a first temperature sensor 58, and a second temperature sensor 59. The flight control device 40 includes a storage device 35. In FIG. 2, the storage device 35 is shown as an FSD, the outside air temperature sensor 36 is shown as an OTS, and the flight control device 40 is shown as an FCD. Further, the rotation sensor 55 is shown as RS, the current sensor 56 is shown as IS, the voltage sensor 57 is shown as VS, the first temperature sensor 58 is shown as ITS, and the second temperature sensor 59 is shown as MTS.

The EPU 50 is a device that drives the rotor 20 to rotate, and corresponds to a drive device. EPU is an abbreviation for Electric Propulsion Unit. EPU 50 may also be referred to as an electric drive unit. The EPU 50 is provided individually for each of the plurality of rotors 20. The EPU 50 is aligned with the rotor 20 along the rotor axis. All of the plurality of EPUs 50 are fixed to the body 11. The EPU 50 rotatably supports the rotor 20. The EPU 50 is mechanically connected to the rotor shaft 23. The plurality of EPUs 50 include at least one of (a) the EPU 50 fixed to the body 11 in a state protruding from the outside of the body 11, and (b) the EPU 50 fixed to the body 11 in a state embedded inside the body 11.

The rotor 20 is fixed to the body 11 via the EPU 50. The EPU 50 is designed to prevent tilting relative to the rotor 20. The EPU 50 is capable of tilting together with the rotor 20. When the tilt angle of the rotor 20 is adjusted, the orientation of the EPU 50 is set together with the rotor 20.

The EPU 50 includes a motor device 80, an inverter device 60, and a blower fan 111. The motor device 80 includes a motor 81 and a motor housing 90. The motor 81 is housed in the motor housing 90. The motor 81 is a multi-phase AC motor, and is, for example, a three-phase AC rotating electric machine. The motor 81 functions as an electric motor that is a flight drive source for the eVTOL 10. The motor 81 is driven by electric power from the battery 31. The EPU 50 drives and rotates the rotor 20 by driving the motor 81. As the motor 81, for example, a brushless motor is used.

The motor 81 has a motor stator 81a, a motor rotor 81b, and a motor shaft 81c. The motor shaft 81c is driven to rotate together with the motor rotor 81b with respect to the motor stator 81a. The motor shaft 81c is connected to the rotor shaft 23, and rotates together with the rotor shaft 23. The motor device 80 can drive and rotate the rotor 20 as the motor 81 rotates. In the EPU 50, the motor device 80 and the inverter device 60 are arranged along a motor axis. The motor axis is a centerline of the motor 81. The motor rotor 81b rotates about the motor axis. The motor device 80 is provided at a position between the rotor 20 and the inverter device 60 in an axial direction along which the motor axis extends.

The inverter device 60 includes an inverter circuit 61, a motor control unit 62, and an inverter housing 70. The inverter circuit 61 and the motor control unit 62 are housed in an inverter housing 70. The inverter circuit 61 drives the motor 81 by converting electric power supplied to the motor 81. The inverter circuit 61 may also be referred to as a drive unit. The inverter circuit 61 converts electric power supplied to the motor 81 from a direct current to an alternating current. The inverter circuit 61 is a power converter that converts electric power. The inverter circuit 61 is a multi-phase power conversion unit, and performs power conversion for each of the plural phases. The inverter circuit 61 is, for example, a three-phase inverter, and may simply be referred to as an inverter. The motor 81 is driven according to a voltage and an electric current supplied from the inverter circuit 61.

The motor control unit 62 performs motor control via the inverter circuit 61. The motor control unit 62 controls the motor 81 by controlling the inverter circuit 61. The motor control unit 62 is electrically connected to the flight control device 40, and performs motor control according to signals from the flight control device 40. The sensors 55 to 59 are electrically connected to the flight control device 40, and output detection signals to the flight control device 40. The flight control device 40 performs motor control via the motor control unit 62 in response to the detection signals from the sensors 55 to 59 and the like. Note that the sensors 55 to 59 may be electrically connected to the motor control unit 62 and may output the detection signals to the motor control unit 62.

The rotation sensor 55 is provided for the motor 81. The rotation sensor 55 detects a rotation number of the motor 81 as a motor rotation speed. The rotation sensor 55 includes, for example, an encoder, a resolver or the like. The current sensor 56 detects an electric current flowing through the motor 81 as a motor current. The current sensor 56 detects the motor current for each of the plurality of phases, for example. The voltage sensor 57 detects a voltage output from the inverter as an inverter voltage. The rotation sensor 55, the current sensor 56, and the voltage sensor 57 are provided in the inverter device 60, for example. These sensors 55 to 57 may also be provided in the motor device 80. Further, these sensors 55 to 57 are sensors that detect a driving state of the **EPU** 50.

The first temperature sensor 58 and the second temperature sensor 59 are provided in the EPU 50, and detect temperature of the EPU 50. The first temperature sensor 58 and the second temperature sensor 59 are provided at positions spaced apart from each other in the EPU 50. The first temperature sensor 58 detects a first temperature, and the second temperature sensor 59 detects a second temperature. The first temperature sensor 58 and the second temperature sensor 59 correspond to a device temperature sensor and a drive temperature sensor.

The first temperature sensor 58 is provided, for example, in the motor device 80, and detects a motor temperature of the motor device 80 as the first temperature. The first temperature sensor 58 detects, for example, temperature of a portion inside the motor housing 90 where the temperature tends to rise as the motor 81 is driven. The second temperature sensor 59 is provided, for example, in the inverter device 60, and detects an inverter temperature of the inverter device 60 as the second temperature. The second temperature sensor 59 detects, for example, temperature of a portion inside the inverter housing 70 where the temperature tends to rise as the inverter circuit 61 is driven.

The battery 31 is electrically connected to the plurality of EPUs 50. The battery 31 is a power supply unit that supplies electric power to the EPU 50, and corresponds to a power source unit. The battery 31 is a DC voltage source that applies DC voltage to the EPU 50. The battery 31 includes a rechargeable secondary battery. Examples of the secondary battery include a lithium ion battery, a nickel-hydrogen battery and the like. In addition to or instead of the battery 31, a fuel cell, a generator, or the like may also be used as the power source unit. The battery 31 can store electric power, and corresponds to a power storage device.

The distributor 32 is electrically connected to the battery 31 and the plurality of EPUs 50. The distributor 32 distributes electric power from the battery 31 to a plurality of EPUs 50. The battery 31 is electrically connected to the plurality of EPUs 50 via the distributor 32. The battery 31 supplies electric power to the EPU 50 via the distributor 32. When the voltage of the battery 31 is referred to as a high voltage, the high voltage is applied to an inverter (described later) in the EPU 50. Note that, if a configuration is such that electric power from the battery 31 is supplied to a plurality of EPUs 50, the distributor 32 may be not provided. An example of a configuration that does not require the distributor 32 is a configuration in which each of the plurality of EPUs 50 is individually provided with a power source unit.

The flight system 30 includes the blower fan 111. The blower fan 111 is attached to the EPU 50. The blowing fan 111 can cool the EPU 50 by blowing air toward the EPU 50. The blower fan 111 is an air cooling fan, and the EPU 50 is an air cooling type drive device. The blower fan 111 corresponds to a cooling unit. When the blower fan 111 blows air, the air sent from the blower fan 111 flows along an outer surface of the EPU 50 as cooling air. In such case, the heat of the EPU 50 is applied to the cooling air, and the EPU 50 is cooled by the cooling air. The blower fan 111 is provided at a position where cooling air flows along the outer surface of the inverter housing 70 and the outer surface of the motor housing 90, respectively. Note that cooling fins may be provided on the outer surface of the EPU 50.

The blower fans 111 are arranged in the EPU 50 along the motor axis. The blower fan 111 rotates together with the motor shaft 81c. The blowing fan 111 is driven and rotated together with the motor shaft 81c. The blower fan 111 is attached to the motor shaft 81c. The motor device 80 can drive and rotate the blower fan 111 in accordance with the drive rotation of the motor 81. The blower fan 111 is provided at a position between the rotor 20 and the EPU 50 in the axial direction.

The flight system 30 includes a clutch 131. The clutch 131 is provided to the motor shaft 81c and the rotor shaft 23. The clutch 131 is capable of interrupting transmission of a driving force from the EPU 50 to the rotor 20. The clutch 131 can shift between a transmission state and an interrupted state. When the clutch 131 is in the transmission state, the driving force of the EPU 50 is transmitted to the rotor 20. In such case, the rotor shaft 23 rotates as the motor shaft 81c rotates. That is, the rotor 20 is driven to rotate as the motor 81 is driven to rotate. When the clutch 131 is in the interrupted state, the driving force of the EPU 50 is not transmitted to the rotor 20. In such case, even if the motor 81 is driven to rotate, the rotor 20 is not driven to rotate.

The clutch 131 is provided at a position between the rotor 20 and the blower fan 111. The clutch 131 does not interrupt the transmission of driving force from the EPU 50 to the blower fan 111. Therefore, regardless of whether the clutch 131 is in the transmission state or the interrupted state, the blowing fan 111 is driven to rotate as the motor 81 is driven to rotate. That is, as the EPU 50 is driven, the EPU 50 is cooled by the blower fan 111.

The eVTOL 10 includes an EPU unit 130 and a propulsion device 135. The EPU unit 130 includes the EPU 50 and the blower fan 111. The EPU unit 130 is a unit in which the EPU 50 and the blower fan 111 are integrated. The propulsion device 135 includes the rotor 20 and the EPU 50. The propulsion device 135 can propel the eVTOL 10 by driving and rotating the rotor 20 by the EPU 50. The propulsion device 135 is a device in which the rotor 20 and the EPU 50 are integrated.

The outside air temperature sensor 36 detects outside air temperature. The outside air temperature sensor 36 is provided, for example, outside the eVTOL 10, and detects the temperature outside the eVTOL 10 as the outside air temperature. The outside air temperature sensor 36 is electrically connected to the flight control device 40, and outputs a detection signal to the flight control device 40.

The flight control device 40 shown in FIG. 2 is, for example, an ECU, and performs flight control for causing the eVTOL 10 to fly. The flight control device 40 is a control device that controls the flight system 30, and controls the EPU 50, for example. The ECU is an abbreviation for Electronic Control Unit. The flight control device 40 is configured to have, as a main component, a microcomputer including, for example, a processor, memory, I/O, and a bus connecting these. A microcomputer may be referred to as a microcomputer. The memory is a non-transitory, tangible storage medium that non-temporarily stores computer readable programs and data. The non-transitory, tangible storage medium is implemented by a semiconductor memory, a magnetic disk, or the like.

The flight control device 40 is electrically connected to the EPU 50. The flight control device 40 performs various processes related to flight control by executing a control program stored in at least one of the memory and the storage device 35. The flight control device 40 performs flight control according to the detection results of various sensors. This flight control includes abnormality diagnosis control for diagnosing abnormalities in the eVTOL 10, EPU control for driving the EPU 50, and the like. The EPU control includes output control that controls the output of the EPU 50, and the like. The storage device 35 stores information related to flight control such as control programs. The various sensors include the rotation sensor 55 and the like. Note that the storage device 35 may be provided independently from the flight control device 40. In such case, it is preferable that the storage device 35 and the flight control device 40 are configured to be communicable with each other.

The abnormality diagnosis control includes EPU control and cooling diagnosis to determine whether a cooling-related abnormality has occurred. The cooling-related abnormality is an abnormality related to cooling of the EPU 50 by the blower fan 111. The cooling-related abnormality include cooling abnormalities, sensor abnormalities and the like. The cooling abnormality is an abnormality in which the EPU 50 is not normally cooled by the blower fan 111. The cooling abnormality includes an abnormality, in which (i) the blowing function of the blower fan 111 is reduced due to a malfunction of the blower fan 111 or the like, (ii) the cooling air from the blower fan 111 can hardly cool the EPU 50 due to obstacles such as dust, and so on. The sensor abnormality is an abnormality in which temperature detection of the EPU 50 by the temperature sensors 58 and 59 is not performed normally. The sensor abnormality includes an abnormality in which the detection function of the temperature sensors 58, 59 is deteriorated due to a failure or the like of the temperature sensors 58, 59, and the like.

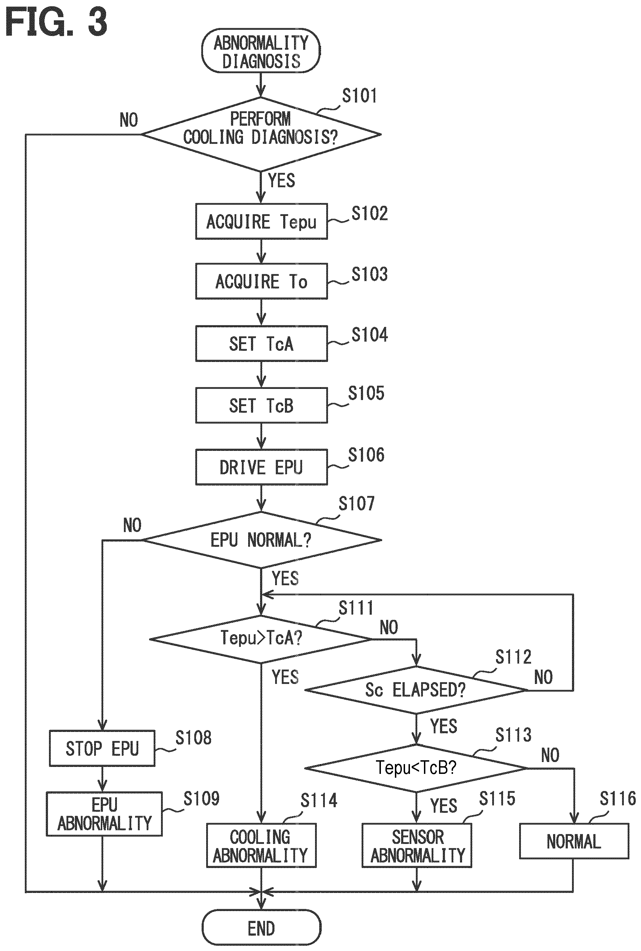

The abnormality diagnosis control will be explained with reference to a flowchart of FIG. 3. The flight control device 40 repeatedly performs abnormality diagnosis control at a predetermined control cycle. The flight control device 40 has a function of executing each step of flight control processing. The eVTOL 10 corresponds to an electric flight vehicle, and the flight control device 40 corresponds to a control device for the electric flight vehicle. The flight control device 40 may also be referred to as a flight controller and an internal controller.

In step S101 shown in FIG. 3, the flight control device 40 perform execution determination regarding whether or not to perform a cooling diagnosis. In this execution determination, it is determined whether or not there has been a diagnosis request for a cooling diagnosis from an operator such as a pilot. For example, when a request operation for requesting a cooling diagnosis is performed on an operation unit, the flight control device 40 determines that a diagnosis request has been made. Further, in this execution determination, it is also determined whether the eVTOL 10 is landing. For example, when the eVTOL 10 is not flying, the flight control device 40 determines that it is landing. In the present embodiment, a state in which the eVTOL 10 is not flying but has landed is referred to as landing.

The timing at which the operator performs the request operation may be before the eVTOL 10 prepares for takeoff. In the present embodiment, the timing at which the cooling diagnosis is performed is assumed to be a timing at which a sufficient amount of time has elapsed after the eVTOL 10 completed its previous flight. At such timing, temperature of the EPU 50 in the eVTOL 10 has decreased to almost the same as the outside air temperature.

When performing a cooling diagnosis, the flight control device 40 proceeds to step S102. The flight control device 40 acquires an EPU temperature Tepu in S102. Here, the EPU temperature Tepu is acquired using the detection signals of the first temperature sensor 58 and the second temperature sensor 59. The EPU temperature Tepu is temperature of the EPU 50. For example, a higher temperature among (a) the inverter temperature detected by the first temperature sensor 58 and (b) the motor temperature detected by the second temperature sensor 59 is acquired as the EPU temperature Tepu. Note that an average temperature of the inverter temperature and the motor temperature may be acquired as the EPU temperature Tepu. The function of executing the process of step S102 in the flight control device 40 corresponds to a temperature acquisition unit.

The flight control device 40 acquires an outside air temperature To in step S103. Here, the current outside air temperature To is acquired using the detection signal of the outside air temperature sensor 36. The function of executing the process of step S103 in the flight control device 40 corresponds to an outside air temperature acquisition unit.

The flight control device 40 sets a convergence upper limit value TcA in step S104. The convergence upper limit value TcA is a value set for the EPU temperature Tepu, and is a threshold value indicating the temperature. The convergence upper limit value TcA is variably set according to the outside air temperature To. The convergence upper limit value TcA is set to a higher value as the outside air temperature To is higher, and is set to a lower value as the outside air temperature To is lower. Information regarding the convergence upper limit value TcA is stored in the storage device 35. The flight control device 40 reads temperature corresponding to the current outside air temperature To from the storage device 35 as the convergence upper limit value TcA. The convergence upper limit value TcA corresponds to s convergence upper limit temperature, and may also be referred to as a convergence temperature determination threshold value.

The flight control device 40 sets a convergence lower limit value TcB in step S105. The convergence lower limit value TcB is a value set for the EPU temperature Tepu, and is a threshold value indicating a temperature. The convergence lower limit value TcB is variably set according to the convergence upper limit value TcA. For example, a temperature lower than the convergence upper limit value TcA by a predetermined temperature is set as the convergence lower limit value TcB. The convergence lower limit value TcB is set to a higher value as the convergence upper limit value TcA is higher. The convergence lower limit value TcB is variably set according to the outside air temperature To via the convergence upper limit value TcA. The convergence lower limit value TcB corresponds to a convergence lower limit temperature. Note that the convergence lower limit value TcB may be variably set according to the outside air temperature To without using the convergence upper limit value TcA.

In the present embodiment, a convergence normal range RTc is set for the EPU temperature Tepu. The convergence normal range RTc is an allowable range set according to the convergence upper limit value TcA and the convergence lower limit value TcB. The convergence upper limit value TcA is an upper limit value of the convergence normal range RTc, and the convergence lower limit value TcB is a lower limit value of the convergence normal range RTc. Note that at least one of the convergence upper limit value TcA and the convergence lower limit value TcB may be set according to weather information different from the outside air temperature To.

The flight control device 40 performs an EPU drive process in step S106. In this process, EPU control is performed so that the EPU 50 is driven. In this process, the output of the EPU 50 is set so that the rotor 20 is driven to rotate at a rotation speed that does not generate a thrust that would cause the eVTOL 10 to ascend. For example, a motor rotation speed is set as the output of the EPU 50. The EPU drive process is also a process for driving the propulsion device 135. When the EPU 50 is driven by the EPU drive process, the blower fan 111 rotates together with the motor 81, and the blower fan 111 cools the EPU 50. In such manner, the EPU drive process is also a process for cooling the EPU 50 by the blower fan 111. The function of performing the process of step S106 in the flight control device 40 corresponds to a drive execution unit and a cooling execution unit.

In the EPU drive process, the output of the EPU 50 is set so that the EPU temperature Tepu rises as the EPU 50 and the blower fan 111 start driving. When the heat generated from the EPU 50 exceeds the cooling of the EPU 50 by the blower fan 111, the EPU temperature Tepu rises. Thereafter, when the heat generation from the EPU 50 and the cooling of the EPU 50 by the blower fan 111 are balanced, the increase in the EPU temperature Tepu converges to a convergence temperature Tc. When the EPU temperature Tepu has converged to the convergence temperature Tc, the increase or decrease in the EPU temperature Tepu becomes almost zero.

In the EPU drive process, the output of the EPU 50 is set so that the convergence temperature Tc is included in the convergence normal range RTc in a state where no cooling-related abnormality occurs. For example, when the output of the EPU 50 is too small, the convergence temperature Tc becomes lower than the convergence lower limit value TcB and is not included in the convergence normal range RTc. When the output of the EPU 50 is too large, the convergence temperature Tc becomes higher than the convergence upper limit value TcA and is not included in the convergence normal range RTc.

The flight control device 40 performs an EPU diagnosis in steps S107 to S109. In the EPU diagnosis, it is determined whether an EPU abnormality, which is an abnormality in the EPU 50, has occurred. The flight control device 40 determines whether the EPU 50 is normal in step S107 of the EPU diagnosis. In such determination, it is determined whether the driving state of the EPU 50 is normal using a detection signal from a sensor that detects the driving state of the EPU 50. The function of performing the process of step S107 in the flight control device 40 corresponds to a drive determination unit.

The flight control device 40 uses, for example, detection signals from at least one of the rotation sensor 55, the current sensor 56, and the voltage sensor 57 to determine whether the driving state of the EPU 50 is normal. When the motor rotation speed detected by the rotation sensor 55 is used, the flight control device 40 determines whether the motor rotation speed is within a normal range. When the motor current detected by the current sensor 56 is used, the flight control device 40 determines whether the motor current is within a normal range. When the inverter voltage detected by the voltage sensor 57 is used, the flight control device 40 determines whether the inverter voltage is within a normal range. The flight control device 40 determines that the EPU 50 is not normal if any one of the motor rotation speed, the motor current, and the inverter voltage is not within the normal range.

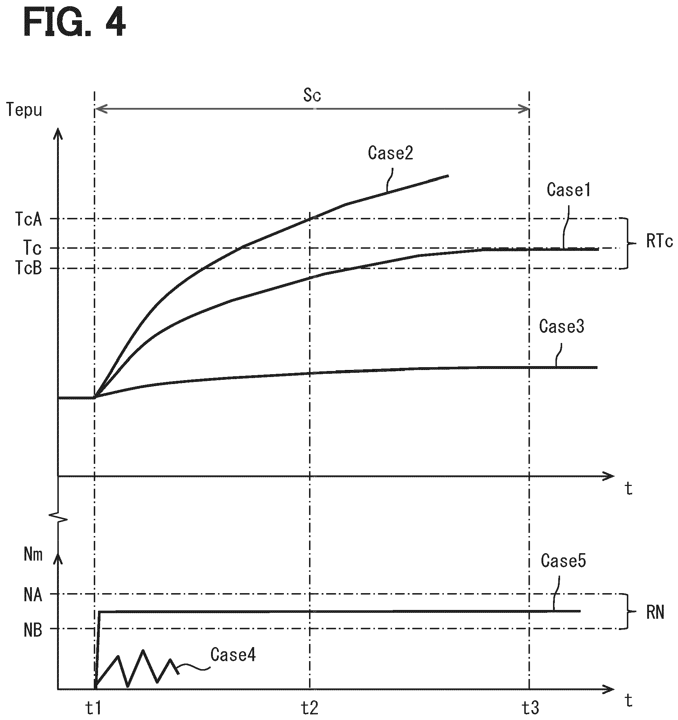

For example, when a motor rotation speed Nm is used as a determination parameter for determining whether the EPU 50 is normal, it is determined whether the motor rotation speed Nm is included in a normal rotation range RN. The normal rotation range RN is a normal range set for the motor rotation speed Nm. For example, when a change mode of the motor rotation speed Nm is Case 4 shown in FIG. 4, the motor rotation speed Nm is not included in the normal rotation range RN. In such case, the flight control device 40 determines that the EPU 50 is not normal because the change mode in which the motor rotation speed Nm changes is not normal.

Returning to FIG. 3, when the EPU 50 is not normal, the flight control device 40 determines that an abnormality has occurred in the EPU 50, and proceeds to step S108. The flight control device 40 performs a EPU stop process in step S108. In this process, EPU control is performed so that driving of the EPU 50 is stopped. When the driving of the EPU 50 is stopped, the driving to rotate the blower fan 111 is stopped. Further, when the driving of the EPU 50 is stopped, the driving to rotate the rotor 20 is also stopped. The EPU stop process is also a process for stopping the driving of the propulsion device 135.

The flight control device 40 performs an EPU abnormality process in step S109. The EPU abnormality process includes a notification process that notifies that an EPU abnormality has occurred, a takeoff prohibition process that prohibits the eVTOL 10 from taking off, and the like. In the notification process, an operator or the like is notified that an EPU abnormality has occurred through audio output, image display, and the like. Further, in the notification process, it may be reported that an abnormality has occurred in the propulsion device 135. In the EPU abnormality process, it is determined that an EPU abnormality has occurred.

When the EPU 50 is normal, it is assumed that no EPU abnormality has occurred, and the flight control device 40 performs a cooling diagnosis in steps S111 to S116. In the cooling diagnosis, a diagnosis is made to determine whether a cooling-related abnormality has occurred in the eVTOL 10. The function of performing the processes of steps S111 to S116 in the flight control device 40 corresponds to a cooling determination unit.

In step S111 of the cooling diagnosis, the flight control device 40 determines whether the EPU temperature Tepu is higher than the convergence upper limit value TcA. The flight control device 40 determines that a cooling abnormality has occurred when the EPU temperature Tepu is higher than the convergence upper limit value TcA. As described above, the convergence upper limit value TcA is variably set according to the outside air temperature To. Therefore, as a determination parameter for determining whether a cooling abnormality has occurred, the flight control device 40 directly uses the EPU temperature Tepu, and indirectly uses the outside air temperature To via the convergence upper limit value TcA. Further, when the EPU temperature Tepu is higher than the convergence upper limit value TcA, the change mode in which the EPU temperature Tepu changes is not included in an allowable range of the cooling abnormality, and is also not included in an allowable range of a cooling-related abnormality. The function of performing the process of step S111 in the flight control device 40 corresponds to a convergence upper limit determination unit.

For example, when a change mode of the EPU temperature Tepu is Case 2 shown in FIG. 4, the EPU temperature Tepu is higher than the convergence upper limit value TcA. In such case, the flight control device 40 determines that a cooling abnormality has occurred, and proceeds to step S114. In Case 2 shown in FIG. 4, driving of the EPU 50 is started at timing t1, and the EPU temperature Tepu becomes higher than the convergence upper limit value TcA after timing t2.

The flight control device 40 performs a cooling abnormality process in step S114. The cooling abnormality process includes a notification process that notifies that a cooling abnormality has occurred, a takeoff prohibition process, and the like. In the notification process, an operator or the like is notified that a cooling abnormality has occurred through audio output, image display, and the like. In the cooling abnormality process, it is determined that a cooling abnormality has occurred as a cooling-related abnormality.

When the EPU temperature Tepu is not higher than the convergence upper limit value TcA, the flight control device 40 proceeds to step S112. In step S112, the flight control device 40 determines whether a convergence reference time Sc has elapsed from the start of driving the EPU 50. In such determination, it is determined whether the driving time of the EPU 50 has reached the convergence reference time Sc. The driving time is an elapsed time after the EPU 50 starts driving. The convergence reference time Sc is a time during which the EPU temperature Tepu can converge to the convergence temperature Tc in a state where no cooling-related abnormality occurs. The convergence reference time Sc is set, for example, to a time longer than the convergence time of the EPU temperature Tepu in a state where no cooling-related abnormality occurs. The convergence time is a time required from the start of driving the EPU 50 until the EPU temperature Tepu converges to the convergence temperature Tc.

Note that the convergence reference time Sc may be variably set according to the outside air temperature To. For example, the lower the outside air temperature To is, the longer the convergence reference time Sc is set. Further, the convergence reference time Sc may be set according to the EPU temperature Tepu before or immediately after the EPU 50 is driven. For example, the higher the EPU temperature Tepu described above, the shorter the convergence reference time Sc is set.

When the convergence reference time Sc has not elapsed from the start of driving the EPU 50, the flight control device 40 returns to step S111. The flight control device 40 repeatedly performs the processing of steps S111 and S112 until the convergence reference time Sc has elapsed from the start of driving the EPU 50. When the convergence reference time Sc has elapsed from the start of driving the EPU 50, the flight control device 40 proceeds to step S113. When the EPU temperature Tepu is lower than the convergence upper limit value TcA even after the convergence reference time Sc has elapsed from the start of driving the EPU 50, it means that no cooling abnormality has occurred. In such case, a change mode in which the EPU temperature Tepu changes is included in the allowable range of the cooling abnormality.

In step S113, the flight control device 40 determines whether the EPU temperature Tepu is lower than the convergence lower limit value TcB. The flight control device 40 determines that a sensor abnormality has occurred when the EPU temperature Tepu is lower than the convergence lower limit value TcB even after the convergence reference time Sc has elapsed from the start of driving the EPU 50. As described above, the convergence lower limit value TcB is variably set according to the outside air temperature To. Therefore, as a determination parameter for determining whether a sensor abnormality has occurred, the flight control device 40 directly uses the EPU temperature Tepu, and indirectly uses the outside air temperature To via the convergence lower limit value TcB. In addition, when the EPU temperature Tepu does not reach the convergence lower limit value TcB even after the convergence reference time Sc has elapsed from the start of driving the EPU 50, the change mode of the EPU temperature Tepu is not included in the allowable range of the sensor abnormality, and is not also included in the allowable range of the cooling-related abnormality. The function of performing the process of step S113 in the flight control device 40 corresponds to a convergence lower limit determination unit.

For example, when a change mode of the EPU temperature Tepu is Case 3 shown in FIG. 4, the EPU temperature Tepu has not risen to the convergence lower limit value TcB even after the convergence reference time Sc has elapsed from the start of driving the EPU 50. In such case, the flight control device 40 determines that the EPU temperature Tepu is lower than the convergence lower limit value TcB, and proceeds to step S115. In FIG. 4, timing t3 is a timing at which the convergence reference time Sc has elapsed from the start of driving the EPU 50.

The flight control device 40 performs a sensor abnormality process in step S115. The sensor abnormality process includes a notification process to notify that a sensor abnormality has occurred, a takeoff prohibition process, and the like. In the notification process, an operator or the like is notified through audio output, image display, and the like that a sensor abnormality has occurred. In the sensor abnormality process, it is determined that a sensor abnormality has occurred as a cooling-related abnormality.

For example, when a change mode of the EPU temperature Tepu is Case 1 shown in FIG. 4, the EPU temperature Tepu becomes higher than the convergence lower limit value TcB by the time the convergence reference time Sc has elapsed from the start of driving the EPU 50. In such case, the flight control device 40 determines that no cooling-related abnormality has occurred, and proceeds to step S116.

The flight control device 40 determines that a sensor abnormality has not occurred when the EPU temperature Tepu has become higher than the convergence lower limit value TcB before the convergence reference time Sc has elapsed after the start of driving the EPU 50. In such case, the change mode in which the EPU temperature Tepu changes is within the allowable range of the sensor abnormality. Further, at timing t3 when the convergence reference time Sc has elapsed from the start of driving the EPU 50, if the EPU temperature Tepu is included in the convergence normal range RTc, the change mode of the EPU temperature Tepu is included in the allowable range of cooling-related abnormality. That is, the change mode in which the EPU temperature Tepu changes is included in both the allowable range of the cooling abnormality and the allowable range of the sensor abnormality.

In Case 1 shown in FIG. 4, the EPU temperature Tepu is included in the convergence normal range RTc at timing t3 when the convergence reference time Sc has elapsed from the start of driving the EPU 50. Note that when no cooling-related abnormality occurs, the motor rotation speed Nm continues to be within the normal rotation range RN as in Case 5 shown in FIG. 4.

The flight control device 40 performs a normal process in step S116. In the normal process, it is assumed that neither the EPU abnormality nor the cooling-related abnormality has occurred, and a notification process that notifies that the EPU 50 and the blower fan 111 are normal, a takeoff permission process that allows the eVTOL 10 to take off, and the like are performed. In the notification process, an operator or the like are notified that the EPU 50 and the blower fan 111 are normal through audio output, image display, and the like. In the normal process, it is determined that the EPU 50 and the blower fan 111 are normal. Note that, in the notification process, it may be reported that the EPU unit 130 and the propulsion device 135 are normal.

The cooling diagnosis using the convergence upper limit value TcA will be summarized. In the cooling diagnosis, it is determined whether or not a cooling-related abnormality has occurred, based on the convergence temperature Tc and the convergence reference time Sc for a state in which no cooling-related abnormality has occurred. Therefore, compared to a configuration in which a rate of change of the EPU temperature Tepu is used for the cooling diagnosis, for example, the time required for the cooling diagnosis is longer, but by knowing the convergence temperature Tc, whether or not the blower fan 111 performs cooling as expected can accurately be determined.

Regarding the cooling diagnosis, when the drive conditions for diagnosis and the outside air temperature To are known, the convergence temperature Tc of the EPU temperature Tepu when the blower fan 111 is normal can be approximately predicted. Therefore, when the actually-detected EPU temperature Tepu exceeds the predicted convergence temperature Tc, it can be determined that the function of the blower fan 111 to cool the EPU 50 has been deteriorated or lost.

Further, the behavior of the temperature sensors 58 and 59 can be monitored as the EPU 50 and the blower fan 111 are driven at a timing before the eVTOL 10 takes off. Therefore, it is possible to confirm whether the blower fan 111 is functioning normally, and the eVTOL 10 can be flown safely.

Further, if the EPU 50 and the blower fan 111 are operating normally, the EPU temperature Tepu should rise according to the driving states of the EPU 50 and the blower fan 111, respectively. Therefore, when the EPU temperature Tepu, which is a value detected by the temperature sensors 58 and 59, is abnormally low, there is a high possibility that an abnormality has occurred in the temperature sensors 58 and 59, than that the temperature of the EPU 50 has not actually increased. Therefore, among cooling-related abnormality, it is possible to distinguish between a cooling abnormality and a sensor abnormality.

According to the embodiment described above, the flight control device 40 determines whether a cooling-related abnormality has occurred. Therefore, when a cooling-related abnormality occurs, it is possible to have the flight control device 40 take safety measures such as notifying that the cooling-related abnormality has occurred or the like. Such safety measure prevents the temperature of the EPU 50 from rising excessively while the eVTOL 10 is in flight, thereby raising the safety level of the eVTOL 10.

According to the present embodiment, when the change mode of the EPU temperature Tepu is within the allowable range of cooling-related abnormality, it is determined that no cooling-related abnormality has occurred. Further, when the change mode of change in the EPU temperature Tepu is not within the allowable range of cooling-related abnormality, it is determined that a cooling-related abnormality has occurred. In such manner, by using the rising behavior of the EPU temperature Tepu for abnormality determination, it is possible to improve the accuracy of determining whether a cooling-related abnormality has occurred.

According to the present embodiment, when the EPU temperature Tepu is higher than the convergence upper limit value TcA, it is determined that a cooling-related abnormality has occurred. In such configuration, the convergence upper limit value TcA compared with the EPU temperature Tepu is the upper limit value of the convergence normal range RTc set for a state where no cooling-related abnormality has occurred. Therefore, it is possible to improve the setting accuracy of the convergence upper limit value TcA. By increasing the setting accuracy of the convergence upper limit value TcA in such manner, the accuracy of the cooling diagnosis using the EPU temperature Tepu is improvable.

According to the present embodiment, when the EPU temperature Tepu becomes higher than the convergence upper limit value TcA, it is determined that a cooling abnormality among cooling-related abnormality has occurred. In such manner, by using the convergence upper limit value TcA for the cooling diagnosis, it is possible to identify that a cooling-related abnormality is a cooling abnormality. Therefore, by using the convergence upper limit value TcA for the cooling diagnosis, it is possible to reduce a work burden on the operator when solving cooling-related abnormality, for example.

According to the present embodiment, even when the convergence reference time Sc has elapsed from the start of driving the EPU 50, if the EPU temperature Tepu is lower than the convergence lower limit value TcB, it is determined that a cooling-related abnormality has occurred. In such configuration, the convergence lower limit value TcB compared with the EPU temperature Tepu is the lower limit value of the convergence normal range RTc set for a state where no cooling-related abnormality has occurred. By increasing the setting accuracy of the convergence lower limit value TcB in such manner, the accuracy of the cooling diagnosis using the EPU temperature Tepu is improvable.

According to the present embodiment, even when the convergence reference time Sc has elapsed from the start of driving the EPU 50, if the EPU temperature Tepu is lower than the convergence lower limit value TcB, it is determined that a sensor abnormality among the cooling-related abnormality has occurred. In such manner, by using the convergence lower limit value TcB for the cooling diagnosis, it is possible to identify that a cooling-related abnormality is a sensor abnormality. Therefore, by using the convergence lower limit value TcB for the cooling diagnosis, it is possible to reduce the work burden on the operator when solving cooling-related abnormalities, for example.

According to the present embodiment, when no EPU abnormality has occurred, it is determined whether a cooling-related abnormality has occurred. Therefore, when an abnormality occurs in the eVTOL 10, it is easy to determine whether the abnormality is an EPU abnormality or a cooling-related abnormality. In such manner, since the EPU abnormality and the cooling-related abnormality can be identified, it is possible to reduce the work burden on the operator when resolving the abnormality in the eVTOL 10, for example.

According to the present embodiment, a determination as to whether a cooling-related abnormality has occurred is performed according to the EPU temperature Tepu and the outside air temperature To. Therefore, the accuracy of determining whether a cooling-related abnormality has occurred is improvable. For example, since heat radiation from the EPU 50 largely depends on the outside air temperature To, more accurate diagnosis can be made by performing the cooling diagnosis in consideration of the outside air temperature To.

According to the present embodiment, it is determined whether a cooling-related abnormality has occurred while both the EPU 50 and the blower fan 111 are being driven. In such manner, by actually driving each of the EPU 50 and the blower fan 111, it is possible to improve the accuracy of determining cooling-related abnormality through the cooling diagnosis.

According to the present embodiment, a cooling diagnosis is performed to determine whether a cooling-related abnormality has occurred in the air-cooled EPU 50 using the blower fan 111. With such a configuration, it is possible to prevent the cooling performance of the blower fan 111 from decreasing and the temperature of the EPU 50 to rise excessively. Therefore, while reducing the weight of the eVTOL 10 by using the blower fan 111, the safety of the eVTOL 10 is improvable by the cooling diagnosis.

According to the present embodiment, the eVTOL 10 is an electric aircraft that includes the rotor 20 and the EPU 50. Therefore, it is easy to realize a configuration that raises the safety level of the eVTOL 10 through the cooling diagnosis.

### <Second Embodiment>

In the first embodiment, the convergence upper limit value TcA and the convergence lower limit value TcB are used as criteria for determining whether a cooling-related abnormality has occurred in the cooling diagnosis. On the other hand, in the second embodiment, a change upper limit temperature and a change lower limit temperature are used as criteria for the cooling diagnosis. Configurations, operations, and effects not specifically described in the second embodiment are the same as those in the first embodiment. In the second embodiment, differences from the above-described first embodiment will be mainly described.

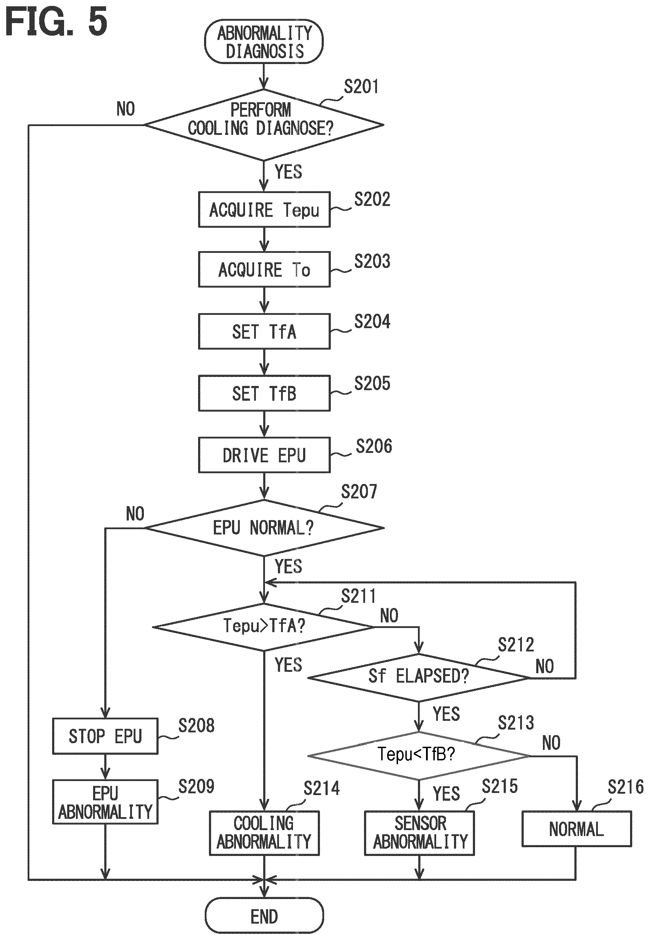

The abnormality diagnosis control of the present embodiment will be explained with reference to a flowchart of FIG. 5. In steps S201 to S203 shown in FIG. 5, the flight control device 40 performs the same processing as steps S101 to S103 in the first embodiment. The function of performing the process of step S202 in the flight control device 40 corresponds to a temperature acquisition unit, and the function of performing the process of step S203 corresponds to an outside air temperature acquisition unit.

The flight control device 40 sets a change upper limit value TfA in step S204. The change upper limit value TfA is a value set for the EPU temperature Tepu, and is a threshold value indicating temperature. The change upper limit value TfA is variably set according to the outside air temperature To. The change upper limit value TfA is set to a smaller value as the current EPU temperature Tepu becomes higher than the outside air temperature To, and is set to a larger value as the current EPU temperature Tepu becomes lower than the outside air temperature To. Information regarding the change upper limit value TfA is stored in the storage device 35. The flight control device 40 reads temperature corresponding to the current outside air temperature To from the storage device 35 as the change upper limit value TfA. The change upper limit value TfA corresponds to the change upper limit temperature, and may also be referred to as a change temperature determination threshold value.

The flight control device 40 sets the change lower limit value TfB in step S105. The change lower limit value TfB is a value set for the EPU temperature Tepu, and is a threshold value indicating temperature. The change lower limit value TfB is variably set according to the change upper limit value TfA. For example, temperature lower than the upper limit value TfA by a predetermined temperature is set as the change lower limit value TfB. The change lower limit value TfB is set to a higher value as the change upper limit value TfA becomes larger. The change lower limit value TfB is variably set according to the outside air temperature To via the change upper limit value TfA. The change lower limit value TfB corresponds to the change lower limit temperature. Note that the change lower limit value TfB may be variably set according to the outside air temperature To without using the change upper limit value TfA.

In the present embodiment, a normal change range RTf is set for the EPU temperature Tepu. The normal change range RTf is an allowable range set according to the change upper limit value TfA and the change lower limit value TfB. The change upper limit value TfA is an upper limit of the normal change range RTf, and the change lower limit value TfB is a lower limit of the normal change range RTf. The change upper limit value TfA is set, for example, to a value smaller than both the convergence temperature Tc and the convergence upper limit value TcA. Further, the change upper limit value TfA is set to a value smaller than, for example, the convergence lower limit value TcB of the first embodiment. The change lower limit value TfB is set, for example, to a value smaller than both the convergence temperature Tc and the convergence lower limit value TcB.

In steps S206 to S209, the flight control device 40 performs the same processing as steps S106 to S109 in the first embodiment. The function of performing the process of step S206 in the flight control device 40 corresponds to a drive execution unit and a cooling execution unit, and the function of performing the process of step S207 corresponds to a drive determination unit. Note that in steps S207 to S209, the EPU diagnosis is performed in the same manner as in the first embodiment.

When the EPU 50 is normal, the flight control device 40 performs a cooling diagnosis in steps S211 to S216, similar to steps S111 to S116 in the first embodiment. The function of performing the processes of steps S211 to S216 in the flight control device 40 corresponds to a cooling determination unit.

In step S211 of the cooling diagnosis, the flight control device 40 determines whether the EPU temperature Tepu is higher than the change upper limit value TfA. The flight control device 40 determines that a cooling abnormality has occurred when the EPU temperature Tepu is higher than the change upper limit value TfA. As described above, the change upper limit value TfA is variably set according to the outside air temperature To. Therefore, as a determination parameter for determining whether a cooling abnormality has occurred, the flight control device 40 uses the EPU temperature Tepu, and also uses the outside air temperature To via the change upper limit value TfA. Further, when the EPU temperature Tepu is higher than the change upper limit value TfA, the change mode in which the EPU temperature Tepu changes is not included in the allowable range of cooling abnormality, and is also not included in the allowable range of cooling-related abnormality. The function of performing the process of step S211 in the flight control device 40 corresponds to a change upper limit determination unit.

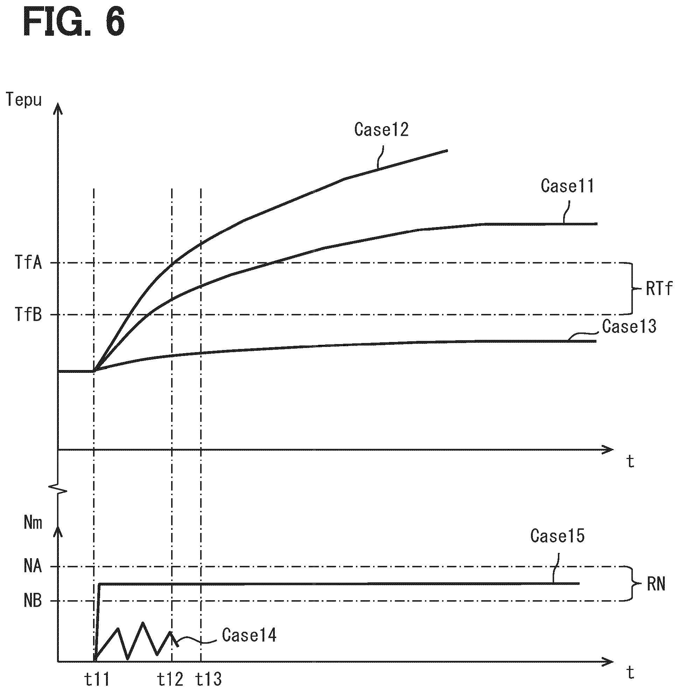

For example, when the change mode of the EPU temperature Tepu is Case 12 shown in FIG. 6, the EPU temperature Tepu is higher than the change upper limit value TfA. In such case, the flight control device 40 determines that a cooling abnormality has occurred, and proceeds to step S214. In Case 12 shown in FIG. 6, driving of the EPU 50 is started at timing t11, and the EPU temperature Tepu becomes higher than the change upper limit value TfA after timing t12. In step S214, the flight control device 40 performs the cooling abnormality process similarly to step S114 in the first embodiment.

When the EPU temperature Tepu is not higher than the change upper limit value TfA, the flight control device 40 proceeds to step S212. In step S212, the flight control device 40 determines whether a change reference time Sf has elapsed from the start of driving the EPU 50. In such determination, it is determined whether the driving time of the EPU 50 has reached the change reference time Sf. The change reference time Sf is a time during which the EPU temperature Tepu can reach the normal change range RTf in a state where no cooling-related abnormality occurs. The change reference time Sf is set, for example, to a time shorter than the convergence time of the EPU temperature Tepu in a state where no cooling-related abnormality occurs. The change reference time Sf corresponds to a shortened reference time.

Note that the change reference time Sf may be variably set according to the outside air temperature To. For example, since the difference in temperature change in the EPU temperature Tepu due to the presence or absence of a cooling abnormality tends to become larger as the outside air temperature To becomes lower, the change reference time Sf is set to a shorter time. Further, the change reference time Sf may be set according to the EPU temperature Tepu before or immediately after the EPU 50 is driven. For example, the higher the EPU temperature Tepu is, the larger the difference in temperature change in the EPU temperature Tepu due to the presence or absence of a cooling abnormality tends to be, the change reference time Sf is set to a shorter time. Alternatively, the change reference time Sf may be variably set according to the EPU temperature Tepu before or immediately after the EPU 50 is driven with respect to the outside air temperature To. For example, since the difference in temperature change in the EPU temperature Tepu due to the presence or absence of a cooling abnormality tends to increase as the EPU temperature Tepu before or immediately after driving is higher with respect to the outside air temperature To, the change reference time Sf is set to a shorter time.

When the change reference time Sf has not elapsed from the start of driving the EPU 50, the flight control device 40 returns to step S211. The flight control device 40 repeatedly performs the process of steps S211 and S212 until the change reference time Sf has elapsed from the start of driving the EPU 50. When the change reference time Sf has elapsed from the start of driving the EPU 50, the flight control device 40 proceeds to step S213. When the EPU temperature Tepu is lower than the change upper limit value TfA even after the change reference time Sf has elapsed from the start of driving the EPU 50, a cooling abnormality has not occurred and the change mode in the EPU temperature Tepu is within the allowable range of cooling abnormality.

Note that the flight control device 40 determines whether the EPU temperature Tepu is higher than the change upper limit value TfA until the change reference time Sf elapses, it is determined whether the rate of change of the EPU temperature Tepu with respect to the change reference time Sf is higher than a change rate upper limit value. The change rate upper limit value is, for example, a ratio of the change upper limit value TfA to the change reference time Sf.

In step S213, the flight control device 40 determines whether the EPU temperature Tepu is lower than the change lower limit value TfB. The flight control device 40 determines that a sensor abnormality has occurred when the EPU temperature Tepu is lower than the change lower limit value TfB even after the change reference time Sf has elapsed from the start of driving the EPU 50. As described above, the change lower limit value TfB is variably set according to the outside air temperature To. Therefore, as a determination parameter for determining whether a sensor abnormality has occurred, the flight control device 40 directly uses the EPU temperature Tepu, and indirectly uses the outside air temperature To via the change lower limit value TfB. In addition, when the EPU temperature Tepu does not reach the change lower limit value TfB even after the change reference time Sf has elapsed from the start of driving the EPU 50, the change mode of the EPU temperature Tepu is not included in the allowable range of the sensor abnormality, and is not included in the allowable range of the cooling-related abnormality. The function of performing the process of step S213 in the flight control device 40 corresponds to a change lower limit determining unit.

For example, when the change mode of the EPU temperature Tepu is Case 13 shown in FIG. 6, the EPU temperature Tepu has not risen to the change lower limit value TfB even after the change reference time Sf has elapsed from the start of driving the EPU 50. In such case, the flight control device 40 determines that the EPU temperature Tepu is lower than the change lower limit value TfB, and proceeds to step S215. In FIG. 6, timing t13 is a timing at which the change reference time Sf has elapsed since the EPU 50 started driving.

Note that the flight control device 40 determines whether the EPU temperature Tepu is lower than the change lower limit value TfB until the change reference time Sf elapses, it is determined whether the rate of change of the EPU temperature Tepu with respect to the change reference time Sf is smaller than the change rate lower limit value. The change rate lower limit value is, for example, the ratio of the change lower limit value TfB to the change reference time Sf.

In step S215, the flight control device 40 performs the sensor abnormality process similarly to step S115 in the first embodiment. For example, when the change mode of the EPU temperature Tepu is Case 11 shown in FIG. 6, the EPU temperature Tepu becomes higher than the change lower limit value TfB by the time the change reference time Sf has elapsed from the start of driving the EPU 50. In such case, the flight control device 40 determines that no cooling-related abnormality has occurred, and proceeds to step S216.

When the EPU temperature Tepu has become higher than the change lower limit value TfB before the change reference time Sf has elapsed from the start of driving the EPU 50, no sensor abnormality has occurred, and the change mode in the EPU temperature Tepu is included in the allowable range of the sensor abnormality. Further, when the EPU temperature Tepu is included in the normal change range RTf at timing t13 when the change reference time Sf has elapsed from the start of driving the EPU 50, the change mode in the EPU temperature Tepu is included in the allowable range of the cooling-related abnormality. In such case, the change mode in which the EPU temperature Tepu changes is included in both the allowable range of the cooling abnormality and the allowable range of the sensor abnormality.

In Case 11 shown in FIG. 6, the EPU temperature Tepu is included in the normal change range RTf at timing t13 when the change reference time Sf has elapsed from the start of driving of the EPU 50. Note that when no cooling-related abnormality occurs, the motor rotation speed Nm continues to be within the normal rotation range RN as in Case 15 shown in FIG. 6.

The flight control device 40 performs the normal process in step S216, similar to step S116 in the first embodiment.

The cooling diagnosis using the change upper limit value TfA will be summarized. In the cooling diagnosis, it is determined whether or not a cooling-related abnormality has occurred according to the normal change range RTf and the change reference time Sf. Therefore, it is not necessary to continuously drive the EPU 50 and the blower fan 111 until the EPU temperature Tepu converges. Therefore, compared to the configuration in which the convergence normal range RTc and the convergence reference time Sc are used for the cooling diagnosis as in the first embodiment, driving the EPU 50 and the blower fan 111 and the cooling diagnosis can be completed in a shorter time.

Regarding the cooling diagnosis, when the driving conditions for diagnosis, the outside air temperature To, and the EPU temperature Tepu before the EPU is driven are known, the rate of change in the EPU temperature Tepu when the blower fan 111 is normal can be approximately predicted. Therefore, when the actually-detected EPU temperature Tepu exceeds the predicted rate of change, it can be determined that the function of the blower fan 111 to cool the EPU 50 has decreased or been lost.

According to the present embodiment, when the EPU temperature Tepu is higher than the change upper limit value TfA, it is determined that a cooling-related abnormality has occurred. In such configuration, the change upper limit value TfA compared with the EPU temperature Tepu is the upper limit value of the normal change range RTf set for a state where no cooling-related abnormality has occurred. Therefore, the setting accuracy of the change upper limit value TfA is improvable. By increasing the setting accuracy of the change upper limit value TfA in such manner, it is possible to raise the accuracy of the cooling diagnosis using the EPU temperature Tepu.

Moreover, it is determined whether or not the EPU temperature Tepu is higher than the change upper limit value TfA until the elapsed time from the start of driving the EPU 50 reaches the change reference time Sf, which is shorter than the convergence time of the EPU temperature Tepu. Therefore, compared to the configuration in which the convergence reference time Sc and the convergence upper limit value TcA are used for the cooling diagnosis as in the first embodiment, it is possible to shorten the time required for the cooling diagnosis and the driving time of the EPU 50. Therefore, by using the change upper limit value TfA in the cooling diagnosis, it is possible to achieve both of (a) improvement of the accuracy of the cooling diagnosis and (b) reduction of energy consumption.

According to the present embodiment, when the EPU temperature Tepu becomes higher than the change upper limit value TfA, it is determined that a cooling abnormality among cooling-related abnormalities has occurred. In such manner, by using the change upper limit value TfA for the cooling diagnosis, it is possible to identify that a cooling-related abnormality is actually a cooling abnormality. Therefore, by using the change upper limit value TfA for the cooling diagnosis, it is possible to reduce the work burden on the operator when solving cooling-related abnormalities, for example.

According to the present embodiment, when the EPU temperature Tepu is lower than the change lower limit value TfB even when the change reference time Sf has elapsed from the start of driving the EPU 50, it is determined that a cooling-related abnormality has occurred. In such configuration, the change lower limit value TfB compared with the EPU temperature Tepu is the lower limit of the normal change range RTf set for a state where no cooling-related abnormality has occurred. Therefore, it is possible to improve the setting accuracy of the change lower limit value TfB. By increasing the setting accuracy of the change lower limit value TfB in such manner, the accuracy of the cooling diagnosis using the EPU temperature Tepu is improvable.

Moreover, it is determined whether the EPU temperature Tepu is higher than the change lower limit value TfB before the elapsed time from the start of driving the EPU 50 reaches the change reference time Sf, which is shorter than the convergence time of the EPU temperature Tepu. Therefore, compared to the configuration in which the convergence reference time Sc and the convergence lower limit value TcB are used for the cooling diagnosis as in the first embodiment, the time required for the cooling diagnosis and the driving time of the EPU 50 can be shortened. Therefore, by using the change lower limit value TfB in the cooling diagnosis, it is possible to achieve both of (a) improvement of the diagnosis accuracy of the cooling diagnosis and (b) reduction of energy consumption.

According to the present embodiment, when the EPU temperature Tepu is lower than the change lower limit value TfB even when the change reference time Sf has elapsed from the start of driving the EPU 50, it is determined that a sensor abnormality among the cooling-related abnormalities has occurred. In such manner, by using the change lower limit value TfB for the cooling diagnosis, it is possible to identify that a cooling-related abnormality is actually a sensor abnormality. Therefore, by using the change lower limit value TfB for the cooling diagnosis, it is possible to reduce the work burden on the operator when solving cooling-related abnormalities, for example.

### <Third Embodiment>

In the third embodiment, both of (a) the cooling diagnosis is performed using the convergence normal range RTc and the convergence reference time Sc as in the first embodiment and (b) the cooling diagnosis is performed using the normal change range RTf and change reference time Sf as in the second embodiment are performed The configurations, operations, and effects which are not particularly described in the third embodiment are the same as those in the first and second embodiments. The third embodiment will be mainly described with respect to the points that are different from the first and second embodiments.

In the present embodiment, the cooling diagnosis performed in steps S111 to S116 in the first embodiment is referred to as a normal diagnosis. Further, the cooling diagnosis performed in steps S211 to S216 in the second embodiment is referred to as a simple diagnosis. Note that the cooling diagnosis performed in steps S111 to S116 may be referred to as a first diagnosis, and the cooling diagnosis performed in steps S211 to S216 may be referred to as a second diagnosis.

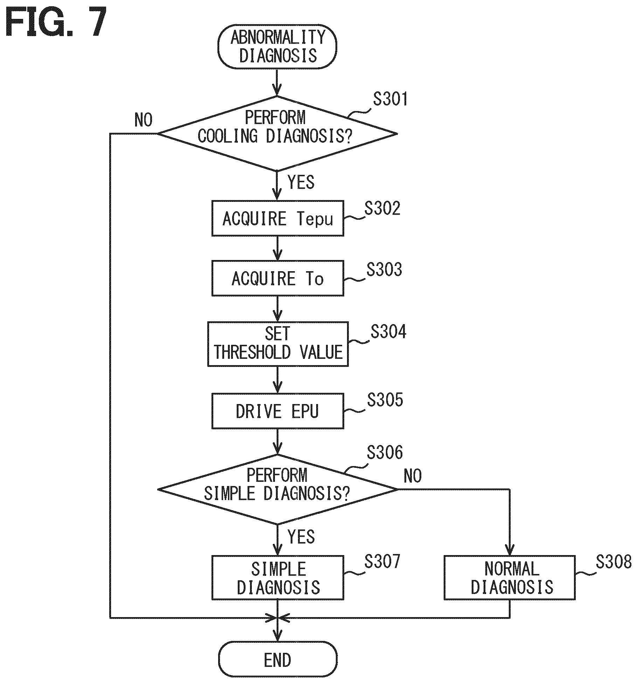

The abnormality diagnosis control of the present embodiment will be explained with reference to a flowchart of FIG. 7. In steps S301 to S303 shown in FIG. 7, the flight control device 40 performs the same process as steps S101 to S103 in the first embodiment. The function of performing the process of step S302 in the flight control device 40 corresponds to a temperature acquisition unit. The function of performing the process of step S303 corresponds to an outside air temperature acquisition unit.

The flight control device 40 performs a threshold setting process in step S304. In this process, thresholds such as the convergence upper limit value TcA, the convergence lower limit value TcB, the change upper limit TfA, and the change lower limit TfB are set. That is, in this process, the processes of steps S104 and S105 of the first embodiment and the processes of steps S204 and S205 of the second embodiment are performed. In step S305, the flight control device 40 performs the EPU drive process similarly to the first embodiment.

The flight control device 40 determines whether or not to perform a simple diagnosis in step S306. In such determination, it is determined whether a flight interval since the eVTOL 10 completed its previous flight has reached a determination time. When the flight interval has not reached the determination time, it is determined that a simple diagnosis should be performed. When the flight interval has reached the determination time, it is determined that the simple diagnosis is not performed and the normal diagnosis is performed. Note that in such determination, it may be determined whether the temperature difference between the EPU temperature Tepu before the EPU is driven and the outside air temperature To is greater than a determination temperature. When the temperature difference is greater than the determination temperature, it is determined that the flight interval is relatively short and a simple diagnosis is to be performed. When the temperature difference is not greater than the determination temperature, it is determined that the flight interval is relatively long and that the simple diagnosis is not performed but the normal diagnosis is performed.

When performing a simple diagnosis, the flight control device 40 proceeds to step S307, and performs a simple diagnosis. In the simple diagnosis, a cooling diagnosis is performed similarly to steps S111 to S116 in the first embodiment. The function of performing the process of step S307 in the flight control device 40 corresponds to a cooling determination unit. Note that, in addition to the simple diagnosis, the EPU diagnosis may be performed in the same manner as steps S107 to S109 in the first embodiment.

When the simple diagnosis is not to be performed, the flight control device 40 proceeds to step S308, and performs a normal diagnosis. In the normal diagnosis, a cooling diagnosis is performed in the same manner as steps S211 to S216 in the second embodiment. The function of performing the process of step S308 in the flight control device 40 corresponds to a cooling determination unit. Note that, in addition to the normal diagnosis, the EPU diagnosis may be performed in the same manner as steps S207 to S209 of the second embodiment.

### <Fourth Embodiment>

In the third embodiment, the flight control device 40 selectively performs one of the simple diagnosis and the normal diagnosis. In contrast, in the fourth embodiment, the flight control device 40 can perform both of the simple diagnosis and the normal diagnosis. Configurations, operations, and effects not particularly described in the fourth embodiment are the same as those in the third embodiment described above. In the fourth embodiment, differences from the third embodiment described above will be mainly explained.

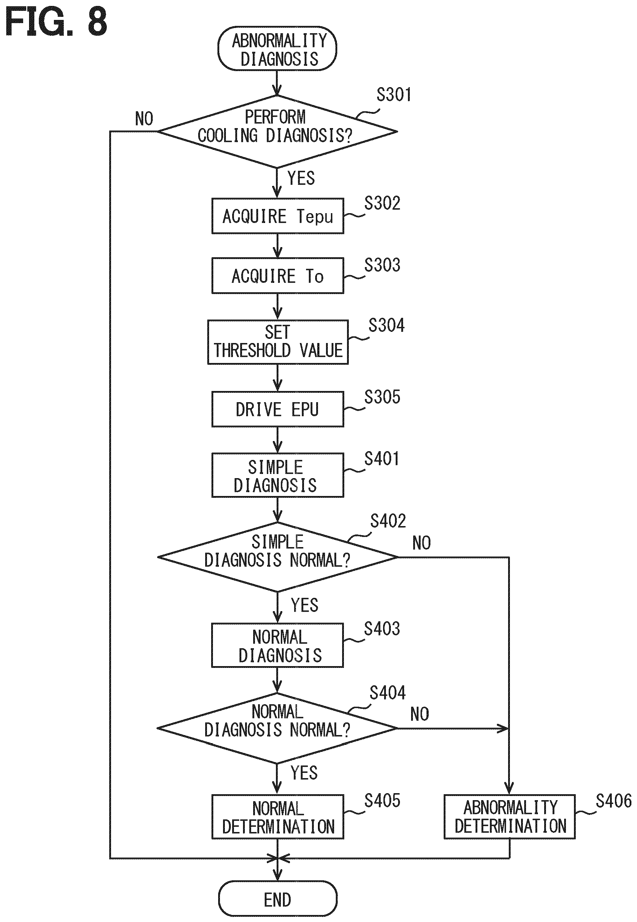

The abnormality diagnosis control of the present embodiment will be explained with reference to a flowchart of FIG. 8. The flight control device 40 performs steps S301 to S305 in the same manner as in the third embodiment. After step S305, the flight control device 40 proceeds to step S401, and performs the simple diagnosis similarly to step S307 of the third embodiment. The function of performing the process of step S401 in the flight control device 40 corresponds to a cooling determination unit. The flight control device 40 determines whether a result of the simple diagnosis is normal in step S402.

When the result of the simple diagnosis is not normal, the flight control device 40 proceeds to step S406, and performs an abnormality determination process. In this process, a notification process is performed to notify that the result of the simple diagnosis is abnormal. When the result of the simple diagnosis is not normal, it is determined that a cooling abnormality or a sensor abnormality has occurred. Note that when the configuration is such that the EPU diagnosis is performed together with the simple diagnosis, the result of the EPU diagnosis may be notified in the notification process.

When the result of the simple diagnosis is normal, the flight control device 40 proceeds to step S403, and performs the normal diagnosis similarly to step S308 of the third embodiment. The function of performing the process of step S403 in the flight control device 40 corresponds to a cooling determination unit. The flight control device 40 determines whether a result of the normal diagnosis is normal in step S404.

When the result of the normal diagnosis is not normal, the flight control device 40 proceeds to step S406, and performs the abnormality determination process. In this process, the notification process is performed to notify that the result of the normal diagnosis is abnormal. When the result of the normal diagnosis is not normal, it is determined that a cooling abnormality or a sensor abnormality has occurred. Note that when the configuration is such that the EPU diagnosis is performed together with the normal diagnosis, the result of the EPU diagnosis may be notified in the notification process.

When the results of the simple diagnosis and the normal diagnosis are both normal, the flight control device 40 proceeds to step S405, and performs a normality determination process. In this process, the notification process is performed to notify that the results of the simple diagnosis and the normal diagnosis are normal.

In the present embodiment, when it is diagnosed by both of the simple diagnosis and the normal diagnosis that no cooling-related abnormality has occurred, it is determined that the EPU 50 is cooled normally. Therefore, more cautious diagnosis is performable, for example, compared to a configuration in which the system is determined to be normal when it is determined by either the simple diagnosis or the normal diagnosis that no cooling-related abnormality has occurred.

### <Fifth Embodiment>

In the fifth embodiment, the EPU 50 is driven so that the rotor 20 is not drive to rotate during the abnormality diagnosis control. Configurations, operations, an effects not particularly described in the fifth embodiment are the same as those in the above-described first embodiment. In the fifth embodiment, differences from the above-described first embodiment will be mainly described.

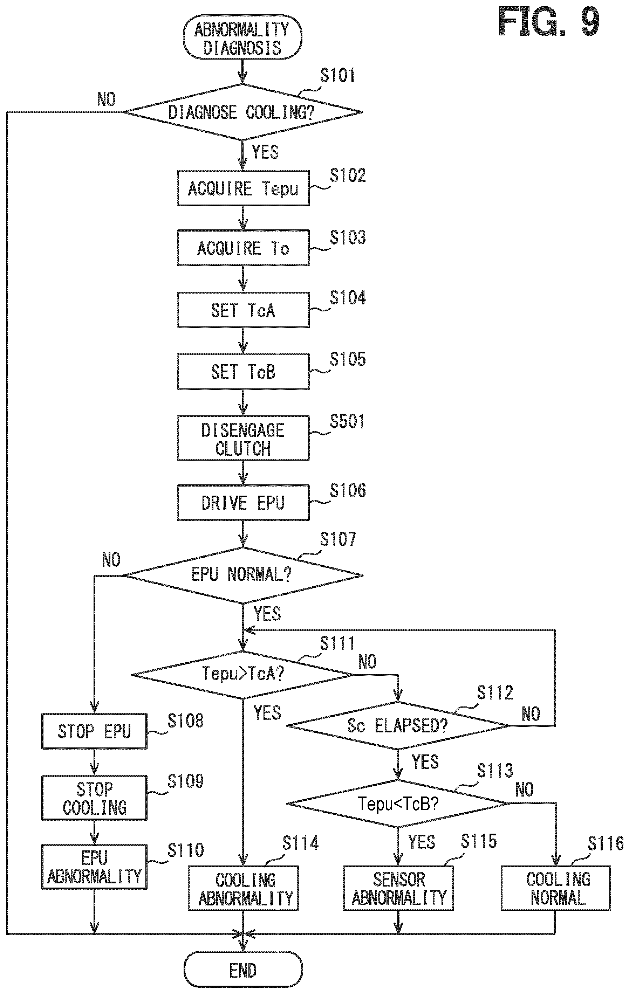

The abnormality diagnosis control of the present embodiment will be explained with reference to a flowchart of FIG. 9. After S101 to S105 shown in FIG. 9, the flight control device 40 performs a clutch interruption process in step S501. In this process, a process for shifting the clutch 131 to an interrupted state is performed. The function of performing the process of step S501 in the flight control device 40 corresponds to an interruption execution unit.

In step S106, the flight control device 40 performs the EPU drive process with the clutch 131 in the interrupted state. When this process is performed, the EPU 50 is driven while the rotor 20 is not driven to rotate.

In the EPU drive process, the EPU control is performed so that the output of the EPU 50 is higher than a reference output. The reference output is an upper limit value of the EPU output within a regulation range in which a thrust that would cause the eVTOL 10 to ascend is not generated when the EPU 50 drives and rotates the rotor 20 while the clutch 131 is in the transmission state. The reference output is, for example, the EPU output when the EPU 50 is driven in step S106 of the first embodiment. The EPU output is the output of the EPU 50, and increases or decreases depending on the motor current, for example. When the motor current at a time of when the EPU 50 is driven so that the EPU output becomes the upper limit of the regulation range is referred to as a current upper limit value, the flight control device 40 drives the EPU 50 for causing the motor current to be higher than the current upper limit value in the EPU drive process.

According to the present embodiment, in the abnormality diagnosis control, the EPU 50 is driven in a state where transmission of driving force from the EPU 50 to the rotor 20 is interrupted by the clutch 131. In such configuration, the rotor 20 does not rotate even when the EPU 50 is driven, thereby even when the EPU output becomes higher than the reference output, the eVTOL 10 is prevented from becoming unstable due to the thrust generated by the driving to rotate the rotor 20. In the EPU 50, the greater the EPU output is, the more likely the EPU temperature Tepu will rise, thereby reducing the time required for the cooling diagnosis.

### <Sixth Embodiment>

In the first embodiment, the EPU 50 can be cooled by the blower fan 111. On the other hand, in the present embodiment, the EPU 50 can be cooled by a cooling device using a refrigerant. Configurations, operations, and effects not particularly described in the sixth embodiment are the same as those in the above-described first embodiment. In the sixth embodiment, differences from the above-described first embodiment will be mainly described.

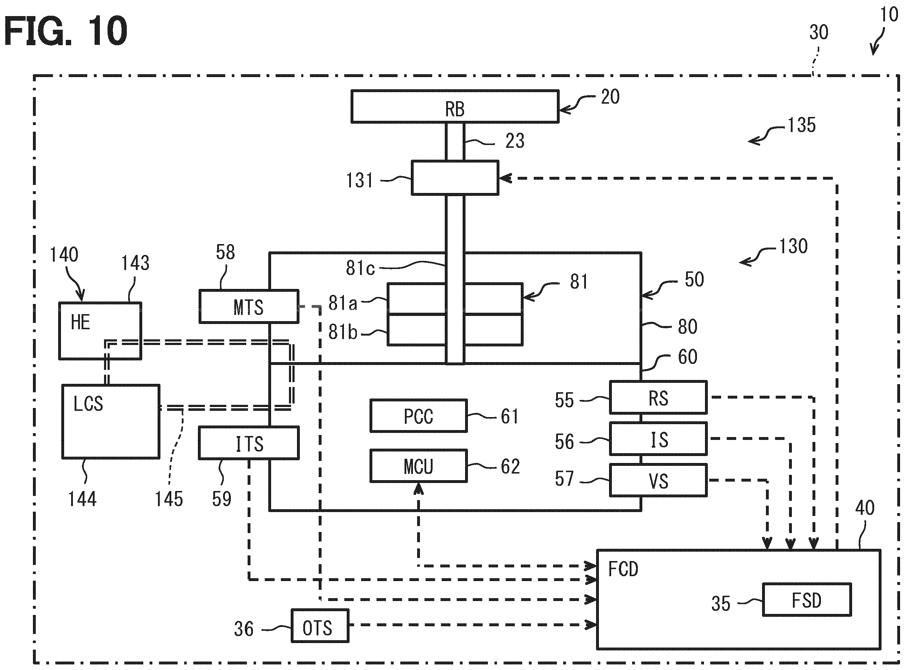

The flight system 30 shown in FIG. 10 includes a cooling device 140. The cooling device 140 is installed in the eVTOL 10, and is a system for cooling the EPU 50. The cooling device 140 includes a heat exchanger 143, a circulation device 144, and a circulation channel 145. In FIG. 10, the heat exchanger 143 is shown as **HE,** and the circulation device 144 is shown as LCS.

The cooling device 140 cools the EPU 50 using a refrigerant. The refrigerant is a liquid such as a cooling liquid. The cooling device 140 cools the EPU 50 by applying heat of the EPU 50 to a refrigerant. The cooling device 140 is a liquid circulation device, and the EPU 50 is a liquid cooling type drive device. Note that the refrigerant may be any fluid, and may also be a gas such as air or the like. The cooling device 140 corresponds to a cooling unit.

In the cooling device 140, a refrigerant circulates through the circulation channel 145. The circulation channel 145 is a channel through which a refrigerant flows, and is formed by a channel forming unit. The channel forming unit is formed of a member such as metal piping or the like, and has heat conductivity. The circulation device 144 pumps the refrigerant in the circulation channel 145 using a pump or the like so that the refrigerant circulates through the circulation channel 145. The heat exchanger 143 can receive heat from the refrigerant. The heat exchanger 43 can release heat of the refrigerant to the outside.

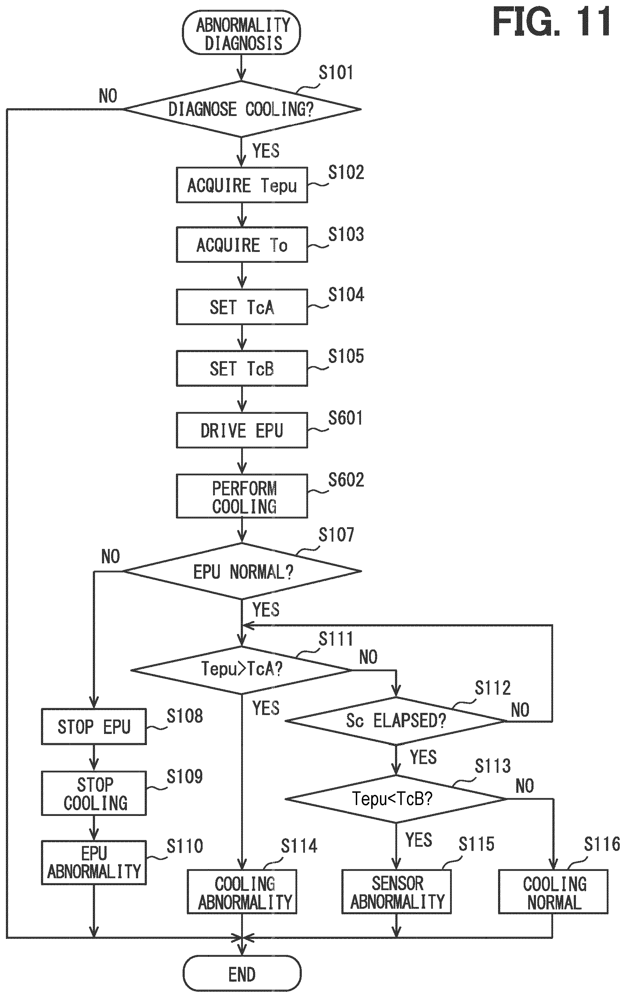

The abnormality diagnosis control of the present embodiment will be explained with reference to a flowchart of FIG. 11. After steps S101 to S105 shown in FIG. 11, the flight control device 40 performs the EPU drive process in step S601. In the present embodiment, the blower fan 111 is not provided for the EPU 50. Therefore, even when the EPU 50 is driven by the EPU drive process, the EPU 50 is not cooled by the blower fan 111. The function of performing the process of step S601 in the flight control device 40 corresponds to a drive execution unit.

The flight control device 40 performs a cooling process in step S602. In this process, a process for cooling the EPU 50 by the cooling device 140 is performed. In the cooling device 140, the refrigerant is circulated by driving the circulation device 144, and the EPU 50 is cooled by the refrigerant. In the cooling process, a cooling output of the cooling device 140 is set so that the convergence temperature Tc is included in the convergence normal range RTc in a state where no cooling-related abnormality occurs. The cooling output is the strength with which the cooling device 140 cools the EPU 50, and is adjusted, for example, by the amount of refrigerant circulated. The function of performing the process of step S602 in the flight control device 40 corresponds to a cooling execution unit.

According to the present embodiment, the cooling device 140 and the EPU 50 are driven independently of each other. In such configuration, the cooling output of the cooling device 140 is adjustable according to the output of the EPU 50 and the like. By adjusting the cooling output of the cooling device 140, it becomes possible to improve the accuracy of the cooling diagnosis and to shorten the time required for the cooling diagnosis, together with other improvements.

### <Seventh Embodiment>

In the seventh embodiment, the cooling diagnosis is performed individually for a plurality of parts included in the EPU 50. Configurations, operations, and effects not particularly described in the seventh embodiment are the same as those in the above-described first embodiment. In the seventh embodiment, differences from the above-described first embodiment will be mainly described.

The EPU 50 includes a first part and a second part. The first part is a part whose temperature is detected by the first temperature sensor 58, and is, for example, the motor device 80. The second part is a part whose temperature is detected by the second temperature sensor 59, and is, for example, the inverter device 60. In the EPU 50, the first temperature sensor 58 and the second temperature sensor 59 are arranged in a direction along which cooling air from the blower fan 111 flows. The first temperature sensor 58 is located upstream of the second temperature sensor 59 in the flow direction of the cooling air.

When the direction along which the cooling air flows is a direction of a cooling path, the first temperature sensor 58 is also located upstream of the second temperature sensor 59 in the cooling path. In the cooling path, the first temperature sensor 58 is an upstream temperature sensor, and the first part, which is the motor device 80, is an upstream part. Further, the second temperature sensor 59 is a downstream temperature sensor, and the inverter device 60, which is the second part, is a downstream part.

Note that in the configuration in which the cooling device 140 cools the EPU 50 with the refrigerant as in the sixth embodiment, the first temperature sensor 58 and the second temperature sensor 59 may be arranged in the circulation channel 145 in the direction along which the refrigerant flows. For example, when the refrigerant is flowing from the inverter device 60 toward the motor device 80 in the circulation channel 145, the inverter device 60 is located upstream of the motor device 80 in the cooling path. In such cooling path, the second temperature sensor 59 is the upstream temperature sensor, and the inverter device 60, which is the second part, is the upstream part. Further, the first temperature sensor 58 is the downstream temperature sensor, and the motor device 80, which is the second part, is the downstream part.

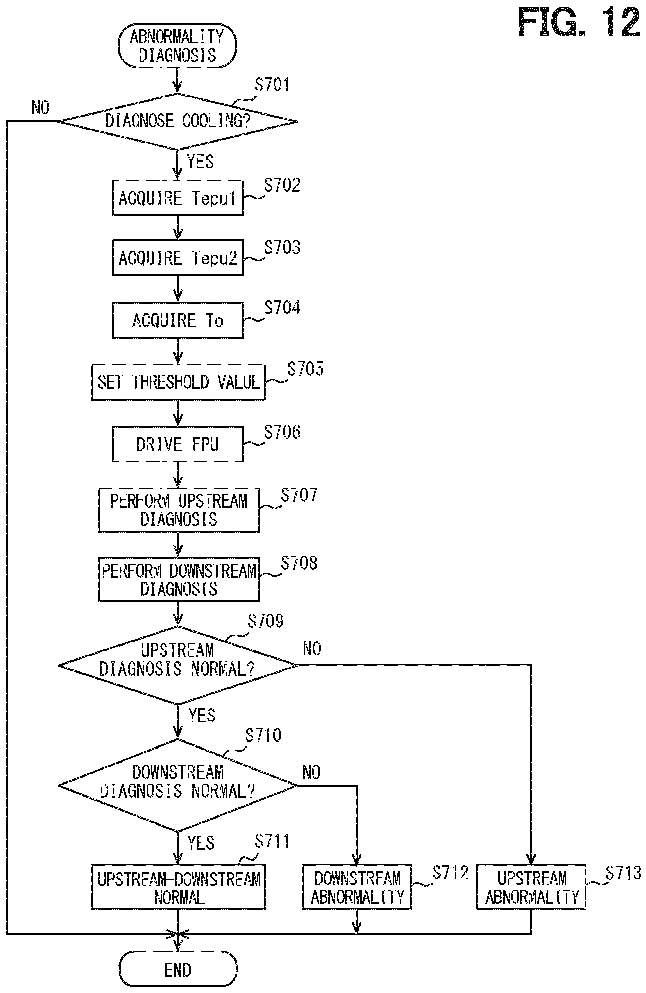

The abnormality diagnosis control of the present embodiment will be explained with reference to a flowchart of FIG. 12. In the abnormality diagnosis control of the present embodiment, the normal diagnosis is performed as the cooling diagnosis. Note that the simple diagnosis may also be performed as the cooling diagnosis.

The flight control device 40 performs an execution determination in step S701 shown in FIG. 12 in the same manner as step S101 of the first embodiment. When performing the cooling diagnosis, the flight control device 40 proceeds to step S702. In step S702, the flight control device 40 acquires an upstream temperature Tepu1 using the detection signal of the upstream temperature sensor. The upstream temperature Tepu1 is a temperature of the upstream part, and is, for example, the motor temperature. In step S703, the flight control device 40 acquires a downstream temperature Tepu2 using the detection signal of the downstream temperature sensor. The downstream temperature Tepu2 is a temperature of the downstream part, and is, for example, the inverter temperature. The upstream temperature Tepu1 and the downstream temperature Tepu2 correspond to a device temperature. The function of performing the process of step S702 in the flight control device 40 and the function of performing the process of step S703 correspond to a temperature acquisition unit.

In step S704, the flight control device 40 acquires the outside air temperature To, similarly to step S103 of the first embodiment. The function of performing the process of step S704 in the flight control device 40 corresponds to the outside air temperature acquisition unit.

The flight control device 40 performs the threshold setting process in step S705. In this process, a threshold value is set for each of the upstream temperature Tepu1 and the downstream temperature Tepu2. For example, the convergence upper limit value TcA and the convergence lower limit value TcB are set for each of the upstream temperature Tepu1 and the downstream temperature Tepu2.

In step S706, the flight control device 40 performs the EPU drive process similarly to step S106 of the first embodiment. The function of performing the process of step S706 in the flight control device 40 corresponds to a drive execution unit and a cooling execution unit.

The flight control device 40 performs an upstream diagnosis in step S707. The upstream diagnosis is the cooling diagnosis targeting the upstream part. In the upstream diagnosis, the cooling diagnosis is performed using a threshold value such as the convergence upper limit value TcA set for the upstream temperature Tepu1. Such process corresponds to a functional cooling determination unit that performs the process of step S707 in the flight control device 40. Note that the EPU diagnosis may be performed together with the upstream diagnosis.

The flight control device 40 performs a downstream diagnosis in step S708. The downstream diagnosis is the cooling diagnosis targeting the downstream part. In the downstream diagnosis, the cooling diagnosis is performed using a threshold value such as the convergence lower limit value TcB set for the downstream temperature Tepu2. The function of performing the process of step S708 in the flight control device 40 corresponds to a cooling determination unit. Note that the EPU diagnosis may be performed together with the downstream diagnosis.

In step S709, the flight control device 40 determines whether a result of the upstream diagnosis is normal. When the result of the upstream diagnosis is not normal, the flight control device 40 proceeds to step S713, and performs an upstream abnormality process. In the upstream abnormality process, the notification process for notifying that the result of the upstream diagnosis is abnormal, and the like is performed. When the result of the upstream diagnosis is not normal, it is determined that a cooling abnormality or a sensor abnormality has occurred in the upstream part. Note that when the configuration is such that the EPU diagnosis is performed together with the upstream diagnosis, the result of the EPU diagnosis may be notified in the notification process.

When the result of the upstream diagnosis is normal, the flight control device 40 proceeds to step S710. The flight control device 40 determines whether the result of the downstream diagnosis is normal in step S710. When the result of the downstream diagnosis is not normal, the flight control device 40 proceeds to step S712, and performs a downstream abnormality process. In the downstream abnormality process, the notification process for notifying that the result of downstream diagnosis is abnormal, and the like is performed. When the result of the downstream diagnosis is not normal, it is determined that a cooling abnormality or a sensor abnormality has occurred in the downstream part. Note that when the configuration is such that the EPU diagnosis is performed together with the downstream diagnosis, the result of the EPU diagnosis may be notified in the notification process.

When the results of the upstream diagnosis and downstream diagnosis are both normal, the flight control device 40 proceeds to step S711, and performs an upstream-downstream normal process. In this process, the notification process is performed to notify that the results of the upstream diagnosis and the downstream diagnosis are both normal.

According to the present embodiment, when it is diagnosed by both of the upstream diagnosis and the downstream diagnosis that no cooling-related abnormality has occurred, it is determined that the EPU 50 is cooled normally. Therefore, for example, when it is diagnosed that a cooling-related abnormality has occurred, it is possible to identify a part of the EPU 50 where a cooling-related abnormality has occurred. Therefore, for example, the work burden on the operator when solving cooling-related abnormalities is reducible by the upstream diagnosis and the downstream diagnosis. For example, when a determination by the upstream diagnosis is normal and a determination by the downstream diagnosis is abnormal, it can be assumed that an abnormality has occurred at a position between the upstream temperature sensor and the downstream temperature sensor in the cooling path.

### <Other Embodiments>

The disclosure of the present specification is not limited to the exemplified embodiments. The disclosure encompasses the exemplified embodiments and modifications thereof by those skilled in the art. For example, the disclosure is not limited to the combination of components and elements described in the embodiments, and various modifications and implementations can be performed, insofar as they fall within the scope of the appended claims. The disclosure may be implemented in various combinations. The disclosure may have an additional portion that can be added to the embodiments. The disclosure encompasses the omission of components and elements from the embodiments. The disclosure encompasses the replacement or combination of components, elements between one embodiment and other embodiment(s). The disclosed technical scope is not limited to the description of the embodiments. The disclosed technical scope is indicated by the description of the claims, and should be construed to include all changes within the meaning to the description of the claims.

In each of the embodiments described above, the cooling unit such as the blower fan 111, the cooling device 140 and the like only need to have a function of cooling at least a part of the EPU 50. For example, both the blower fan 111 and the cooling device 140 may be provided in the eVTOL 10. In such configuration, the EPU 50 may be cooled by at least one of the blower fan 111 and the cooling device 140. Alternatively, the rotor 20 may function as a cooling unit. For example, the positional relationship between the rotor 20 and the EPU 50 may be set so that a wind generated as the rotor 20 is driven to rotate hits the EPU 50 as cooling air. In such configuration, the blower fan 111 and the cooling device 140 may be not provided.

In each of the embodiments described above, the EPU 50 may be provided with only one temperature sensor that detects temperature of the EPU 50, or may be provided with a plurality of temperature sensors. The temperature sensor may be provided for the heat source of the EPU 50. For example, when the EPU 50 has a plurality of heat sources, a temperature sensor may be provided for each of the plurality of heat sources. Further, the motor device 80 may be provided with a plurality of the first temperature sensors 58, and the inverter device 60 may be provided with a plurality of the second temperature sensors 59.

For example, in the first embodiment, the temperature sensors 58 and 59 may be provided at positions where the cooling air from the blower fan 111 hits. In the sixth embodiment, the temperature sensors 58 and 59 may be provided so as to fit within a case of the EPU 50, or may be provided inside the circulation channel 145. The temperature sensors 58 and 59 may detect temperature of the EPU 50 by detecting temperature of the refrigerant. In such configuration, the temperature sensors 58 and 59 do not need to be provided in the EPU 50, but only need to be provided in the cooling device 140 at a position where the refrigerant temperature is detectable.

Further, in a configuration in which a plurality of cooling units are provided for the EPU 50, a temperature sensor may be provided for each of the plurality of cooling units. For example, in a configuration in which the EPU 50 is provided with both of the blower fan 111 and the cooling device 140, a temperature sensor corresponding to the blower fan 111 and a temperature sensor corresponding to the cooling device 140 may be provided. A temperature sensor corresponding to the blower fan 111 may detect temperature of a portion of the EPU 50 that is cooled by the blower fan 111. A temperature sensor corresponding to the cooling device 140 may detect temperature of a portion of the EPU 50 that is cooled by the cooling device 140.

In each of the embodiments described above, the threshold values such as the convergence upper limit value TcA and the convergence reference time Sc may be variably set in any manner with respect to parameters such as the outside air temperature To. For example, in the first embodiment, the convergence upper limit value TcA may be set to a higher value as the outside air temperature To becomes lower. Further, the higher the EPU temperature Tepu, the longer the convergence reference time Sc may be set. In the second embodiment, the change upper limit value TfA may be set to a higher value as the current EPU temperature Tepu is higher with respect to the outside air temperature To. Further, the change reference time Sf may be set to a shorter time as the outside air temperature To becomes lower. Further, the change reference time Sf may be set to a longer time as the EPU temperature Tepu before or immediately after driving becomes higher. In addition, the change reference time Sf may be set to a longer time as the EPU temperature Tepu before or immediately after driving with respect to the outside air temperature To becomes higher.

In each of the embodiments described above, the threshold values such as the convergence upper limit value TcA and the convergence reference time Sc may be variably set according to (a) weather information different from the outside air temperature To and (b) environmental information of the eVTOL 10. For example, when rainy weather is acquired from the weather information, the convergence upper limit value TcA may be set to a smaller value than when it is not rainy. Further, when it is acquired from the environmental information that it is nighttime, the convergence upper limit value TcA may be set to a smaller value than during the daytime.

In the above-described first embodiment, in the cooling diagnosis, it may be determined whether the change in the EPU temperature Tepu has converged. When it is determined that the change in the EPU temperature Tepu has converged, even when the convergence reference time Sc has not elapsed from the start of driving the EPU 50, it may be determined in step S113 whether the EPU temperature Tepu is smaller than the convergence lower limit value TcB. For example, the flight control device 40 determines that the change in the EPU temperature Tepu has converged when the change in the EPU temperature Tepu has become sufficiently small even before the convergence reference time Sc has elapsed. The flight control device 40 uses the EPU temperature Tepu when it is determined that the change in the EPU temperature Tepu has converged to determine whether the EPU temperature Tepu is smaller than the convergence lower limit value TcB. In such configuration, the result of the cooling diagnosis can be acquired without waiting for the elapse of the convergence reference time Sc, so the time required for the cooling diagnosis can be shortened.

In each of the above embodiments, the eVTOL 10 does not need to be a tilt rotor aircraft. That is, one rotor 20 does not need to be configured to serve as both of a lift rotor and as a cruise rotor. For example, one rotor 20 is configured to function as only one of a lift rotor and a cruise rotor. In such configuration, the plurality of rotors 20 include a lift rotor and a cruise rotor in the eVTOL 10. In such eVTOL 10, the lift rotor is driven when ascending, and the cruise rotor is driven when moving forward. The lift rotors may also be referred to as hover rotors.

In each of the above embodiments, the vertical takeoff and landing aircraft on which the flight control device 40 is mounted may be an electric vertical takeoff and landing aircraft in which at least one rotor 20 is driven by at least one EPU 50. For example, one rotor 20 may be driven by a plurality of EPUs 50, or a plurality of rotors 20 may be driven by one EPU 50.

In each of the above embodiments, the flight vehicle on which the flight control device 40 is mounted does not need to be a vertical takeoff and landing aircraft as long as it is electrically powered. For example, the flight vehicle may be a flight vehicle capable of taking off and landing while gliding, as an electric aircraft. Further, the flight vehicle may be a rotor blade aircraft or a fixed wing aircraft. The flight vehicle may also be an unmanned flight vehicle with no humans on board.

In each of the above embodiments, the flight control device 40 is provided by a control system including at least one computer. The control system includes at least one processor that is hardware. The processor, which is now be referred to as a hardware processor, can be provided in the following manner (i), (ii), or (iii).

(i) The hardware processor may be a hardware logic circuit. In such case, the computer is provided with a digital circuit including a number of programmed logic units (gate circuits). The digital circuit may comprise a memory for storing at least one of programs and/or data. The computer may be provided by an analog circuit. The computer may be provided as a combination of a digital circuit and an analog circuit.
(ii) The hardware processor may be at least one processor core that executes a program stored in at least one memory. In such case, the computer is provided with at least one memory and at least one processor core. The processor core is called, for example, as a CPU. The memory is also called as a storage medium. The memory is a non-transitory, tangible storage medium in which "at least one of a program and data" that is computer-readable by the processor is non-temporarily stored.
(iii) The hardware processor may be a combination of (i) and (ii) described above. (i) and (ii) are placed on different chips or on a common chip.

That is, at least one of the means and functions provided by the flight control device 40 can be provided only by hardware, only by software, or a combination thereof.

## Claims

1. A control device (40) configured to control an electric flight vehicle (10), the electric flight vehicle including an electric drive device (50) configured to drive and rotate a rotor blade (20) and a cooling unit (111, 140) configured to cool the drive device, the control device comprising:
a temperature acquisition unit (S102, S202, S302, S702, S703) configured to acquire temperature of the drive device as a device temperature (Tepu, Tepu1, Tepu2); and
a cooling determination unit (S111 to S116, S211 to S216, S307, S308, S401, S403, S707, S708) configured to determine, according to the device temperature, whether a cooling-related abnormality has occurred as an abnormality related to cooling of the drive device by the cooling unit,
wherein
the cooling determination unit is configured to
determine that the cooling-related abnormality has not occurred when a change mode of the device temperature is within an allowable range, and
determine that the cooling-related abnormality has occurred when the change mode of the device temperature is not within the allowable range,
the cooling determination unit includes a convergence upper limit determination unit (S111),
the convergence upper limit determination unit is configured to determine whether the device temperature is higher than a convergence upper limit temperature (TcA), which is an upper limit of the temperature at which the device temperature converges in a state where the cooling-related abnormality has not occurred, and
the cooling determination unit is configured to determine that the cooling-related abnormality has occurred when the device temperature is higher than the convergence upper limit temperature
the convergence upper limit determination unit is configured to determine that an abnormality in the cooling unit has occurred as the cooling-related abnormality,
**characterised in that**
the cooling determination unit includes a convergence lower limit determination unit (S113) configured to, after drive of the drive device is started, after the cooling unit starts cooling of the drive device, and when a convergence reference time (Sc), at which the device temperature converges in a state in which the cooling-related abnormality has not occurred, has elapsed,
determine whether the device temperature is lower than a convergence lower limit temperature (TcB), which is a lower limit of the temperature at which the device temperature converges in a state in which the cooling-related abnormality has not occurred,
the cooling determination unit is configured to determine that the cooling-related abnormality has occurred when the convergence reference time has elapsed and when the device temperature is lower than the convergence lower limit temperature,
the temperature acquisition unit is configured to acquire the device temperature using a detection result of a device temperature sensor (58, 59) provided in the drive device, and
the convergence lower limit determination unit is configured to determine that an abnormality in the device temperature sensor has occurred as the cooling-related abnormality.

2. The control device for the electric flight vehicle according to claim 1, wherein
the cooling determination unit includes a change upper limit determination unit (S211),
the change upper limit determination unit is configured to, after drive of the drive device is started, after the cooling unit starts cooling of the drive device, and before a change reference time (Sf), which is shorter than a time (Sc) at which the device temperature converges in a state in which the cooling-related abnormality has not occurred, elapses,
determine whether the device temperature becomes higher than a change upper limit temperature (TfA), which is lower than a convergence upper limit value (TcA) at which the device temperature converges in a state where the cooling-related abnormality has not occurred, and
the cooling determination unit is configured to determine that the cooling-related abnormality has occurred when the device temperature becomes higher than the change upper limit temperature before the change reference time elapses.

3. The control device for the electric flight vehicle according to claim 2, wherein
the change upper limit determination unit is configured to determine that an abnormality in the cooling unit has occurred as the cooling-related abnormality.

4. The control device for the electric flight vehicle according to any one of claims 1 to 3, wherein:
the cooling determination unit includes a change lower limit determination unit (S213),
the change lower limit determination unit is configured to, after drive of the drive device is started, after the cooling unit starts cooling of the drive device, and when a shortened reference time (Sf), which is shorter than a time (Sc) at which the device temperature converges in a state in which the cooling-related abnormality has not occurred, elapses,
determine whether the device temperature is lower than a change lower limit temperature (TfB), which is lower than a temperature lower limit value (TcB) at which the device temperature converges in a state where the cooling-related abnormality has not occurred, and
the cooling determination unit is configured to determine that the cooling-related abnormality has occurred when the device temperature is lower than the change lower limit temperature when the shortened reference time has elapsed.

5. The control device for the electric flight vehicle according to claim 4, wherein
the temperature acquisition unit is configured to acquire the device temperature using a detection result of a drive temperature sensor (58, 59) provided in the drive device, and
the change lower limit determination unit is configured to determine that an abnormality in the drive temperature sensor has occurred as the cooling-related abnormality.

6. The control device for the electric flight vehicle according to any one of claims 1 to 5, further comprising:
a drive determination unit (S107, S207) configured to determine whether an abnormality has occurred in the drive device, wherein
the cooling determination unit is configured to determine whether the cooling-related abnormality has occurred when no abnormality has occurred in the drive device.

7. The control device for the electric flight vehicle according to any one of claims 1 to 6, further comprising:
an outside air temperature acquisition unit (S103, S203, S303, S704) configured to acquire outside air temperature (To), wherein
the cooling determination unit is configured to determine whether the cooling-related abnormality has occurred according to the outside air temperature in addition to the device temperature.

8. The control device for the electric flight vehicle according to any one of claims 1 to 7, further comprising:
a drive execution unit (S106, S206, S305, S601, S706) configured to drive the drive device; and
a cooling execution unit (S106, S206, S305, S602, S706) configured to cool the drive device by the cooling unit, wherein
the cooling determination unit is configured to determine whether the cooling-related abnormality has occurred when the drive execution unit drives the drive device and the cooling execution unit cools the drive device.

9. The control device for the electric flight vehicle according to claim 8, wherein
the cooling unit includes a blower fan (111) configured to be driven and rotated by the drive device and blow air toward the drive device, and
the cooling execution unit is configured to cool the drive device by causing the blower fan to blow air.

10. The control device for the electric flight vehicle according to claim 8 or 9, wherein
the cooling unit includes a cooling device (140) configured to perform heat exchange between refrigerant and the drive device, and
the cooling execution unit is configured to cool the drive device by driving the cooling device.

11. The control device for the electric flight vehicle according to any one of claims 8 to 10, further comprising:
an interruption execution unit (S501) configured to interrupt transmission of a driving force from the drive device to the rotor blade by a clutch (131), wherein
the drive execution unit is configured to drive the drive device in a state where transmission of the driving force is interrupted by the clutch.

12. The control device for the electric flight vehicle according to any one of claims 1 to 11, wherein
the drive device includes a motor (81) and configured to drive and rotate the rotor blade by driving the motor, and
the electric flight vehicle is an electric aircraft that flies by being driven by the drive device.

## Patentansprüche

1. Steuervorrichtung (40), die konfiguriert ist, um ein elektrisches Fluggerät (10) zu steuern, wobei das elektrische Fluggerät eine elektrische Antriebsvorrichtung (50), die zum Antreiben und zum Drehen eines Rotorblatts (20) konfiguriert ist, und eine Kühleinheit (111, 140), die zum Kühlen der Antriebsvorrichtung konfiguriert ist, aufweist, wobei die Steuervorrichtung umfasst:
eine Temperaturerfassungseinheit (S102, S202, S302, S702, S703), die konfiguriert ist, um die Temperatur der Antriebsvorrichtung als eine Vorrichtungstemperatur (Tepu, Tepu1, Tepu2) zu erfassen; und
eine Kühlungsbestimmungseinheit (S111 bis S116, S211 bis S216, S307, S308, S401, S403, S707, S708), die konfiguriert ist, um gemäß der Vorrichtungstemperatur zu bestimmen, ob eine kühlungsbezogene Anomalie als eine Anomalie aufgetreten ist, die sich auf die Kühlung der Antriebsvorrichtung durch die Kühleinheit bezieht, wobei
die Kühlungsbestimmungseinheit konfiguriert ist, um
zu bestimmen, dass die kühlungsbezogene Anomalie nicht aufgetreten ist, wenn ein Änderungsmodus der Vorrichtungstemperatur innerhalb eines zulässigen Bereichs ist, und
zu bestimmen, dass die kühlungsbezogene Anomalie aufgetreten ist, wenn der Änderungsmodus der Vorrichtungstemperatur nicht innerhalb des zulässigen Bereichs ist,
die Kühlungsbestimmungseinheit eine Konvergenzobergrenzen-Bestimmungseinheit (S111) aufweist,
die Konvergenzobergrenzen-Bestimmungseinheit konfiguriert ist, um zu bestimmen, ob die Vorrichtungstemperatur höher ist als eine Konvergenzobergrenzen-Temperatur (TcA), die eine Obergrenze der Temperatur ist, bei der die Vorrichtungstemperatur in einem Zustand konvergiert, in dem die kühlungsbezogene Anomalie nicht aufgetreten ist, und
die Kühlungsbestimmungseinheit konfiguriert ist, um zu bestimmen, dass die kühlungsbezogene Anomalie aufgetreten ist, wenn die Vorrichtungstemperatur höher ist als die Konvergenzobergrenzen-Temperatur,
die Konvergenzobergrenzen-Bestimmungseinheit konfiguriert ist, um zu bestimmen, dass eine Anomalie in der Kühleinheit als kühlungsbezogene Anomalie aufgetreten ist,
**dadurch gekennzeichnet, dass**
die Kühlungsbestimmungseinheit eine Konvergenzuntergrenzen-Bestimmungseinheit (S113) enthält, die konfiguriert ist, um nach dem Starten des Antriebs der Antriebsvorrichtung, nachdem die Kühleinheit mit der Kühlung der Antriebsvorrichtung beginnt, und wenn eine Konvergenzreferenzzeit (Sc), bei der die Vorrichtungstemperatur in einem Zustand konvergiert, in dem die kühlungsbezogene Anomalie nicht aufgetreten ist, verstrichen ist,
zu bestimmen, ob die Vorrichtungstemperatur niedriger ist als eine Temperatur der Konvergenzuntergrenze (TcB), die eine untere Grenze der Temperatur ist, bei der die Vorrichtungstemperatur in einem Zustand konvergiert, in dem die kühlungsbezogene Anomalie nicht aufgetreten ist,
die Kühlungsbestimmungseinheit konfiguriert ist, um zu bestimmen, dass die kühlungsbezogene Anomalie aufgetreten ist, wenn die Konvergenzreferenzzeit verstrichen ist und wenn die Vorrichtungstemperatur niedriger als die Temperatur der Konvergenzuntergrenze ist,
die Temperaturerfassungseinheit konfiguriert ist, um die Vorrichtungstemperatur unter Verwendung eines Erfassungsergebnisses eines in der Antriebsvorrichtung vorgesehenen Vorrichtungstemperatursensors (58, 59) zu erfassen, und
die Konvergenzuntergrenzen-Bestimmungseinheit konfiguriert ist, um zu bestimmen, dass eine Anomalie in dem Vorrichtungstemperatursensor als die kühlungsbezogene Anomalie aufgetreten ist.

2. Steuervorrichtung für das elektrische Fluggerät nach Anspruch 1, wobei
die Kühlungsbestimmungseinheit eine Änderungsobergrenzen-Bestimmungseinheit (S211) aufweist,
die Änderungsobergrenzen-Bestimmungseinheit konfiguriert ist, um nach dem Starten des Antriebs der Antriebsvorrichtung, nachdem die Kühleinheit mit der Kühlung der Antriebsvorrichtung beginnt, und bevor eine Änderungsreferenzzeit (Sf), die kürzer als eine Zeit (Sc) ist, bei der die Vorrichtungstemperatur in einem Zustand konvergiert, in dem die kühlungsbezogene Anomalie nicht aufgetreten ist, verstreicht,
zu bestimmen, ob die Vorrichtungstemperatur höher wird als eine Temperatur der Änderungsobergrenze (TfA), die niedriger ist als eine Konvergenzobergrenze (TcA), bei der die Vorrichtungstemperatur in einem Zustand konvergiert, in dem die kühlungsbezogene Anomalie nicht aufgetreten ist, und
die Kühlungsbestimmungseinheit konfiguriert ist, um zu bestimmen, dass die kühlungsbezogene Anomalie aufgetreten ist, wenn die Vorrichtungstemperatur vor Ablauf der Änderungsreferenzzeit höher als die Temperatur der Änderungsobergrenze wird.

3. Steuervorrichtung für das elektrische Fluggerät nach Anspruch 2, wobei
die Änderungsobergrenzen-Bestimmungseinheit konfiguriert ist, um zu bestimmen, dass eine Anomalie in der Kühleinheit als kühlungsbezogene Anomalie aufgetreten ist.

4. Steuervorrichtung für das elektrische Fluggerät nach einem der Ansprüche 1 bis 3, wobei:
die Kühlungsbestimmungseinheit eine Änderungsuntergrenzen-Bestimmungseinheit (S213) aufweist,
die Änderungsuntergrenzen-Bestimmungseinheit konfiguriert ist, um nach dem Starten des Antriebs der Antriebsvorrichtung, nachdem die Kühleinheit mit der Kühlung der Antriebsvorrichtung beginnt, und wenn eine verkürzte Referenzzeit (Sf), die kürzer als eine Zeit (Sc) ist, bei der die Vorrichtungstemperatur in einem Zustand konvergiert, in dem die kühlungsbezogene Anomalie nicht aufgetreten ist, verstreicht,
zu bestimmen, ob die Vorrichtungstemperatur niedriger ist als eine Temperatur der Änderungsuntergrenze (TfB), die niedriger ist als ein unterer Temperaturgrenzwert (TcB), bei dem die Vorrichtungstemperatur in einem Zustand konvergiert, in dem die kühlungsbezogene Anomalie nicht aufgetreten ist, und
die Kühlungsbestimmungseinheit konfiguriert ist, um zu bestimmen, dass die kühlungsbezogene Anomalie aufgetreten ist, wenn die Vorrichtungstemperatur niedriger ist als die Temperatur der Änderungsuntergrenze, wenn die verkürzte Referenzzeit verstrichen ist.

5. Steuervorrichtung für das elektrische Fluggerät nach Anspruch 4, wobei
die Temperaturerfassungseinheit konfiguriert ist, um die Vorrichtungstemperatur unter Verwendung eines Erfassungsergebnisses eines in der Antriebsvorrichtung vorgesehenen Antriebsstemperatursensors (58, 59) zu erfassen, und
die Änderungsuntergrenzen-Bestimmungseinheit konfiguriert ist, um zu bestimmen, dass eine Anomalie in dem Antriebstemperatursensor als die kühlungsbezogene Anomalie aufgetreten ist.

6. Steuervorrichtung für das elektrische Fluggerät nach einem der Ansprüche 1 bis 5, ferner umfassend:
eine Antriebsbestimmungseinheit (S107, S207), die konfiguriert ist, um zu bestimmen, ob eine Anomalie in der Antriebsvorrichtung aufgetreten ist, wobei
die Kühlungsbestimmungseinheit konfiguriert ist, um zu bestimmen, ob die kühlungsbezogene Anomalie aufgetreten ist, wenn keine Anomalie in der Antriebsvorrichtung aufgetreten ist.

7. Steuervorrichtung für das elektrische Fluggerät nach einem der Ansprüche 1 bis 6, ferner umfassend:
eine Erfassungseinheit für die Außenlufttemperatur (S103, S203, S303, S704), die zum Erfassen der Außenlufttemperatur (To) konfiguriert ist, wobei
die Kühlungsbestimmungseinheit konfiguriert ist, um zu bestimmen, ob die kühlungsbezogene Anomalie gemäß der Außenlufttemperatur zusätzlich zu der Vorrichtungstemperatur aufgetreten ist.

8. Steuervorrichtung für das elektrische Fluggerät nach einem der Ansprüche 1 bis 7, ferner umfassend:
eine Antriebsausführungseinheit (S106, S206, S305, S601, S706), die zum Antreiben der Antriebsvorrichtung konfiguriert ist; und
eine Kühlausführungseinheit (S106, S206, S305, S602, S706), die zum Kühlen der Antriebsvorrichtung durch die Kühleinheit konfiguriert ist, wobei
die Kühlungsbestimmungseinheit konfiguriert ist, um zu bestimmen, ob die kühlungsbezogene Anomalie aufgetreten ist, wenn die Antriebsausführungseinheit die Antriebsvorrichtung antreibt und die Kühlausführungseinheit die Antriebsvorrichtung kühlt.

9. Steuervorrichtung für das elektrische Fluggerät nach Anspruch 8, wobei
die Kühleinheit einen Gebläseventilator (111) aufweist, das konfiguriert ist, um von der Antriebsvorrichtung angetrieben und gedreht zu werden und Luft in Richtung der Antriebsvorrichtung zu blasen, und
die Kühlausführungseinheit konfiguriert ist, um die Antriebsvorrichtung zu kühlen, indem sie den Gebläseventilator zum Ausstoßen von Luft veranlasst.

10. Steuervorrichtung für das elektrische Fluggerät nach Anspruch 8 oder 9, wobei
die Kühleinheit eine Kühlvorrichtung (140) aufweist, die konfiguriert ist, um einen Wärmeaustausch zwischen dem Kältemittel und der Antriebsvorrichtung durchzuführen, und
die Kühlausführungseinheit konfiguriert ist, um die Antriebsvorrichtung durch Ansteuerung der Kühlvorrichtung zu kühlen.

11. Steuervorrichtung für das elektrische Fluggerät nach einem der Ansprüche 8 bis 10, ferner umfassend:
eine Unterbrechungsausführungseinheit (S501), die konfiguriert ist, um die Übertragung einer Antriebskraft von der Antriebsvorrichtung auf das Rotorblatt durch eine Kupplung (131) zu unterbrechen, wobei
die Antriebsausführungseinheit konfiguriert ist, um die Antriebsvorrichtung in einem Zustand anzutreiben, in dem die Übertragung der Antriebskraft durch die Kupplung unterbrochen ist.

12. Steuervorrichtung für das elektrische Fluggerät nach einem der Ansprüche 1 bis 11, wobei
die Antriebsvorrichtung einen Motor (81) aufweist und konfiguriert ist, um das Rotorblatt durch den Antrieb des Motors anzutreiben und zu drehen, und
das elektrische Fluggerät ein Elektroflugzeug ist, das angetrieben durch die Antriebsvorrichtung fliegt.

## Revendications

1. Dispositif de commande (40) configuré pour commander un véhicule volant électrique (10), le véhicule volant électrique comprenant un dispositif d'entraînement électrique (50) configuré pour entraîner et faire tourner une pale de rotor (20) et une unité de refroidissement (111, 140) configurée pour refroidir le dispositif d'entraînement, le dispositif de commande comprenant :
une unité d'acquisition de la température (S102, S202, S302, S702, S703) configurée pour acquérir une température du dispositif d'entraînement en tant que température du dispositif (Tepu, Tepu1, Tepu2) ; et
une unité de détermination du refroidissement (S111 à S116, S211 à S216, S307, S308, S401, S403, S707, S708) configurée pour déterminer, en fonction de la température du dispositif, si une anomalie liée au refroidissement s'est produite en tant qu'anomalie liée au refroidissement du dispositif d'entraînement par l'unité de refroidissement, dans laquelle
l'unité de détermination du refroidissement est configurée pour
déterminer que l'anomalie liée au refroidissement ne s'est pas produite lorsqu'un mode de changement de la température du dispositif se situe dans une plage autorisée, et
déterminer que l'anomalie liée au refroidissement s'est produite lorsque le mode de changement de la température du dispositif ne se situe pas dans la plage autorisée,
l'unité de détermination du refroidissement comprend une unité de détermination de la limite supérieure de convergence (S111),
l'unité de détermination de la limite supérieure de convergence est configurée pour déterminer si la température du dispositif est supérieure à une température limite supérieure de convergence (TcA), qui est une limite supérieure de la température à laquelle la température du dispositif converge dans un état où l'anomalie liée au refroidissement ne s'est pas produite, et
l'unité de détermination du refroidissement est configurée pour déterminer que l'anomalie liée au refroidissement s'est produite lorsque la température du dispositif est supérieure à la température limite supérieure de convergence,
l'unité de détermination de la limite supérieure de convergence est configurée pour déterminer qu'une anomalie s'est produite dans l'unité de refroidissement en tant qu'anomalie liée au refroidissement,
**caractérisée en ce que**
l'unité de détermination du refroidissement comprend une unité de détermination de la limite inférieure de convergence (S113) configurée pour, après le démarrage de l'entraînement du dispositif d'entraînement, après que l'unité de refroidissement commence à refroidir le dispositif d'entraînement, et lorsqu'un temps de référence de convergence (Sc), auquel la température du dispositif converge dans un état où l'anomalie liée au refroidissement ne s'est pas produite, s'est écoulé,
déterminer si la température du dispositif est inférieure à une température limite inférieure de convergence (TcB), qui est une limite inférieure de la température à laquelle la température du dispositif converge dans un état où l'anomalie liée au refroidissement ne s'est pas produite,
l'unité de détermination du refroidissement est configurée pour déterminer que l'anomalie liée au refroidissement s'est produite lorsque le temps de référence de convergence s'est écoulé et que la température du dispositif est inférieure à la température limite inférieure de convergence,
l'unité d'acquisition de température est configurée pour acquérir la température du dispositif à l'aide d'un résultat de détection d'un capteur de température du dispositif (58, 59) fourni dans le dispositif d'entraînement, et
l'unité de détermination de la limite inférieure de convergence est configurée pour déterminer qu'une anomalie dans le capteur de température du dispositif s'est produite en tant qu'anomalie liée au refroidissement.

2. Dispositif de commande pour le véhicule volant électrique selon la revendication 1, dans lequel
l'unité de détermination du refroidissement comprend une unité de détermination de la limite supérieure de changement (S211),
l'unité de détermination de la limite supérieure de changement est configurée pour, après le démarrage de l'entraînement du dispositif d'entraînement, après que l'unité de refroidissement commence à refroidir le dispositif d'entraînement, et avant qu'un temps de référence de changement (Sf), qui est plus court qu'un temps (Sc) auquel la température du dispositif converge dans un état où l'anomalie liée au refroidissement ne s'est pas produite, ne s'écoule,
déterminer si la température du dispositif devient supérieure à une température limite supérieure de changement (TfA), qui est inférieure à une valeur limite supérieure de convergence (TcA) à laquelle la température du dispositif converge dans un état où l'anomalie liée au refroidissement ne s'est pas produite, et
l'unité de détermination du refroidissement est configurée pour déterminer que l'anomalie liée au refroidissement s'est produite lorsque la température du dispositif devient supérieure à la température limite supérieure de changement avant que le temps de référence de changement ne s'écoule.

3. Dispositif de commande pour le véhicule volant électrique selon la revendication 2, dans lequel
l'unité de détermination de la limite supérieure de changement est configurée pour déterminer qu'une anomalie s'est produite dans l'unité de refroidissement en tant qu'anomalie liée au refroidissement.

4. Dispositif de commande pour le véhicule volant électrique selon l'une des revendications 1 à 3, dans lequel :
l'unité de détermination du refroidissement comprend une unité de détermination de la limite inférieure de changement (S213),
l'unité de détermination de la limite inférieure de changement est configurée pour, après le démarrage de l'entraînement du dispositif d'entraînement, après que l'unité de refroidissement commence à refroidir le dispositif d'entraînement, et lorsqu'un temps de référence raccourci (Sf), qui est plus court qu'un temps (Sc) auquel la température du dispositif converge dans un état où l'anomalie liée au refroidissement ne s'est pas produite, s'écoule,
déterminer si la température du dispositif est inférieure à une température limite inférieure de changement (TfB), qui est inférieure à une valeur limite inférieure de température (TcB) à laquelle la température du dispositif converge dans un état où l'anomalie liée au refroidissement ne s'est pas produite, et
l'unité de détermination du refroidissement est configurée pour déterminer que l'anomalie liée au refroidissement s'est produite lorsque la température du dispositif est inférieure à la température limite inférieure de changement lorsque le temps de référence raccourci s'est écoulé.

5. Dispositif de commande pour le véhicule volant électrique selon la revendication 4, dans lequel
l'unité d'acquisition de température est configurée pour acquérir la température du dispositif à l'aide d'un résultat de détection d'un capteur de température d'entraînement (58, 59) fourni dans le dispositif d'entraînement, et
l'unité de détermination de la limite inférieure de changement est configurée pour déterminer qu'une anomalie dans le capteur de température d'entraînement s'est produite en tant qu'anomalie liée au refroidissement.

6. Dispositif de commande pour le véhicule volant électrique selon l'une des revendications 1 à 5, comprenant en outre :
une unité de détermination de l'entraînement (S107, S207) configurée pour déterminer si une anomalie s'est produite dans le dispositif d'entraînement, dans laquelle
l'unité de détermination du refroidissement est configurée pour déterminer si l'anomalie liée au refroidissement s'est produite alors qu'aucune anomalie ne s'est produite dans le dispositif d'entraînement.

7. Dispositif de commande pour le véhicule volant électrique selon l'une des revendications 1 à 6, comprenant en outre :
une unité d'acquisition de la température de l'air extérieur (S103, S203, S303, S704) configurée pour acquérir une température de l'air extérieur (To), dans laquelle
l'unité de détermination du refroidissement est configurée pour déterminer si l'anomalie liée au refroidissement s'est produite en fonction de la température de l'air extérieur en plus de la température du dispositif.

8. Dispositif de commande pour le véhicule volant électrique selon l'une des revendications 1 à 7, comprenant en outre :
une unité d'exécution de l'entraînement (S106, S206, S305, S601, S706) configurée pour entraîner le dispositif d'entraînement ; et
une unité d'exécution de refroidissement (S106, S206, S305, S602, S706) configurée pour refroidir le dispositif d'entraînement par l'unité de refroidissement, dans laquelle
l'unité de détermination du refroidissement est configurée pour déterminer si l'anomalie liée au refroidissement s'est produite lorsque l'unité d'exécution de l'entraînement entraîne le dispositif d'entraînement et que l'unité d'exécution du refroidissement refroidit le dispositif d'entraînement.

9. Dispositif de commande pour le véhicule volant électrique selon la revendication 8, dans lequel
l'unité de refroidissement comprend un ventilateur soufflant (111) configuré pour être entraîné et tourné par le dispositif d'entraînement et souffler de l'air vers le dispositif d'entraînement, et
l'unité d'exécution du refroidissement est configurée pour refroidir le dispositif d'entraînement en faisant souffler de l'air par le ventilateur soufflant.

10. Dispositif de commande pour le véhicule volant électrique selon la revendication 8 ou 9, dans lequel
l'unité de refroidissement comprend un dispositif de refroidissement (140) configuré pour effectuer un échange de chaleur entre le réfrigérant et le dispositif d'entraînement, et
l'unité d'exécution du refroidissement est configurée pour refroidir le dispositif d'entraînement en entraînant le dispositif de refroidissement.

11. Dispositif de commande pour le véhicule volant électrique selon l'une des revendications 8 à 10, comprenant en outre :
une unité d'exécution d'interruption (S501) configurée pour interrompre la transmission d'une force d'entraînement du dispositif d'entraînement à la pale du rotor par un embrayage (131), dans laquelle
l'unité d'exécution de l'entraînement est configurée pour entraîner le dispositif d'entraînement dans un état où la transmission de la force d'entraînement est interrompue par l'embrayage.

12. Dispositif de commande pour le véhicule volant électrique selon l'une des revendications 1 à 11, dans lequel
le dispositif d'entraînement comprend un moteur (81) et est configuré pour entraîner et faire tourner la pale du rotor en entraînant le moteur, et
le véhicule volant électrique est un aéronef électrique qui vole en étant entraîné par le dispositif d'entraînement.
